# EUROPEAN PATENT SPECIFICATION

(11) **EP 4 549 925 B1**
(45) Date of publication and mention of the grant of the patent: **29.04.2026**
(21) Application number: 24209410.0
(22) Date of filing: 29.10.2024
(51) Int. Cl.: G01N 27/447

(54) **ELECTROPHORESIS UNIT, COMPONENT ANALYSIS DEVICE, ELECTROPHORESIS METHOD**
ELEKTROPHORESEEINHEIT, KOMPONENTENANALYSEVORRICHTUNG, ELEKTROPHORESEVERFAHREN
UNITÉ D'ÉLECTROPHORÈSE, DISPOSITIF D'ANALYSE DE COMPOSANT, PROCÉDÉ D'ÉLECTROPHORÈSE

(30) Priority: 30.10.2023 JP 2023185913
(43) Date of publication of application: 07.05.2025
(73) Proprietor: ARKRAY, Inc., Kyoto-shi, Kyoto 601-8045 (JP)
(72) Inventor: TAKANE, Eri, Kyoto, 602-0008 (JP); HONDA, Yasumasa, Kyoto, 602-0008 (JP); MINAMI, Soichiro, Kyoto, 602-0008 (JP)
(74) Representative: Dehns

(56) References cited:
- EP-B1- 3 477 112
- JP-A- 2001 165 939
- US-A- 5 217 590
- MAJARIKAR VIRENDRA ET AL: "Microcapillary electrophoresis chip with a bypass channel for autonomous compensation of hydrostatic pressure flow", MICROFLUIDICS AND NANOFLUIDICS, SPRINGER BERLIN HEIDELBERG, BERLIN/HEIDELBERG, vol. 22, no. 10, 28 September 2018 (2018-09-28), pages 1 - 7, XP036603155, ISSN: 1613-4982, [retrieved on 20180928], DOI: 10.1007/S10404-018-2134-5

## Description

### BACKGROUND

### Technical Field

The present invention relates to an electrophoresis unit, a component analysis device, and an electrophoresis method.

### Related Art

For example, Japanese Patent Application Laid-Open (JP-A) No. 2001-124736 discloses a capillary electrophoresis device in which plural capillaries are arranged on a flat plane at equal intervals parallel to a vertical line, with a sample injection end immersed in a cathodic buffer solution facing vertically downward, with easy connection between the cathodic buffer solution and a sample solution, and the height of the liquid surface in both buffer solutions aligned to prevent movement of a separation medium inside the capillaries.

Moreover, for example, JP-A No. 2020-128904 discloses a microchip electrophoresis device in which leading ends of a first suction nozzle and a second suction nozzle are lowered from above a first reservoir and a second reservoir until they are at a specific height while performing a suction operation such that buffer solutions in the first reservoir and the second reservoir are suctioned in sequence from a surface layer side thereof, and the height of the liquid surface inside the first reservoir and the height of the liquid surface inside the second reservoir are aligned.

Moreover, for example, JP-A No. 2016-024021 discloses an electrophoresis analysis chip including a first reservoir and a second reservoir provided on a substrate, a phoresis path connecting the first reservoir and the second reservoir together for phoresis of a sample, and a liquid level adjustment section capable of adjusting at least one liquid level out of a solution being held in the first reservoir or a solution being held in the second reservoir. The document "Microcapillary electrophoresis chip with a bypass channel for autonomous compensation of hydrostatic pressure flow" by Majarikar Virendra et al. Microfluidics and Nanofluidics, Springer Berlin Heidelberg, vol. 22, no. 10, 28 September 2018, pages 1-7, discloses a method of chip-based microcapillary electrophoresis and a chip design comprising a bypass channel for using with the method.

### SUMMARY

A problem with technology hitherto has been the need to make fine adjustment in liquid level at the two ends of a capillary using an adjustment mechanism or the like, the time needed for adjustment, and that a mechanism therefor is complicated and leads to a large device.

The present invention is defined in the appended claims. At least preferred embodiments of the invention provide technology capable of aligning fluid pressures acting at the two ends of a capillary using a simple mechanism.

An electrophoresis unit of a first aspect, includes: a first inflow path at which a solution flows into the first liquid reservoir, a first outflow path at which the solution flows out from the first liquid reservoir, and a first liquid level adjustment section that is open to an exterior; a second flow path including a second liquid reservoir, a second inflow path at which the solution flows into the second liquid reservoir, a second outflow path at which the solution flows out from the second liquid reservoir, and a second liquid level adjustment section that is open to the exterior; a capillary that leads from the first liquid reservoir to the second liquid reservoir; and an electrode arranged in each of an interior of the first flow path and an interior of the second flow path, wherein vertical direction positions of the first liquid level adjustment section and the second liquid level adjustment section are equal to each other.

In the electrophoresis unit according to the first aspect of the present invention, the vertical direction positions of the externally open first liquid level adjustment section and second liquid level adjustment section are equal to each other, and so the liquid levels standing in the first liquid reservoir and the second liquid reservoir are also equal. This thereby enables fluid pressures acting at the two ends of the capillary to be aligned with a simple mechanism.

### BRIEF DESCRIPTION OF THE DRAWINGS

Exemplary embodiments of the present invention will be described in detail based on the following figures, wherein:
Fig. 1 is a diagram illustrating a schematic configuration of a component analysis device according to a first exemplary embodiment of the present invention;
Fig. 2 is control flowchart of a control unit according to a first exemplary embodiment of the present invention;
Fig. 3A is a schematic diagram to explain a way in which liquid levels of a first liquid reservoir and a second liquid reservoir according to the first exemplary embodiment of the present invention are aligned, and is a diagram illustrating a way in which a migration solution is flowed into the first liquid reservoir;
Fig. 3B is a diagram following on from Fig. 3A, and illustrates a way in which a capillary is filled with migration solution;
Fig. 3C is a diagram following on from Fig. 3B, and illustrates a way in which a sample solution is flowed into the second liquid reservoir;
Fig. 3D is a diagram following on from Fig. 3C, and illustrates a way in which a sample solution is discharged from a second outflow path and a migration solution is discharged from a first outflow path;
Fig. 3E is a diagram following on from Fig. 3D, and illustrates a way in which liquid levels in a first liquid reservoir and a second liquid reservoir have been aligned;
Fig. 3F is a diagram following on from Fig. 3E, and illustrates a way in which a component in a sample solution moves in a capillary under electrophoresis;
Fig. 4 is a diagram illustrating a schematic configuration of a component analysis device according to a second exemplary embodiment of the present invention;
Fig. 5 is a control flowchart of a control unit according to the second exemplary embodiment of the present invention;
Fig. 6A is a schematic diagram to explain a way in which liquid levels in a first liquid reservoir and a second liquid reservoir according to the second exemplary embodiment of the present invention are aligned, and is a diagram illustrating a way in which a migration solution is flowed into the first liquid reservoir;
Fig. 6B is a diagram continuing from Fig. 6A, and illustrates a way in which a sample solution is flowed into the second liquid reservoir;
Fig. 6C is a diagram continuing from Fig. 6B, and illustrates a way in which the liquid levels in the first liquid reservoir and the second liquid reservoir have been aligned;
Fig. 7 is a diagram illustrating a schematic configuration of a component analysis device according to a third exemplary embodiment of the present invention;
Fig. 8 is a control flowchart of a control unit according to the third exemplary embodiment of the present invention;
Fig. 9A is a schematic diagram to explain a way in which liquid levels in a first liquid reservoir and a second liquid reservoir according to the third exemplary embodiment of the present invention are aligned, and is a diagram illustrating a way in which a migration solution is flowed into the first liquid reservoir;
Fig. 9B is a diagram continuing from Fig. 9A, and illustrates a way in which a sample solution is flowed into the second liquid reservoir;
Fig. 9C is a diagram continuing from Fig. 9B, and illustrates a way in which a sample solution is discharged from a second opening path, and also a migration solution is discharged from a first opening path;
Fig. 9D is a diagram continuing from Fig. 9C, and illustrates a way in which a sample solution is discharged from a second inflow path and also a migration solution is discharged from a first inflow path, and liquid levels in a first liquid reservoir and a second liquid reservoir have been aligned;
Fig. 9E is a diagram continuing from Fig. 9D, and is a diagram illustrating a way in which a component contained in a sample solution in a capillary moves under electrophoresis;
Fig. 10 is a diagram illustrating a schematic configuration of a component analysis device according to a fourth exemplary embodiment of the present invention;
Fig. 11 is a control flowchart of a control unit according to a fourth exemplary embodiment of the present invention;
Fig. 12A is a schematic diagram to explain a way in which liquid levels in a first liquid reservoir and a second liquid reservoir according to the fourth exemplary embodiment of the present invention are aligned, and is a diagram illustrating a way in which a migration solution is flowed into the first liquid reservoir;
Fig. 12B is a continuation from Fig. 12A, and is a diagram illustrating a way in which a sample solution is flowed into a second liquid reservoir;
Fig. 12C is a continuation from Fig. 12B, and is a diagram illustrating a way in which a sample solution is discharged from a second opening path and also a migration solution is discharged from a first opening path;
Fig. 12D is a continuation from Fig. 12C, and is a diagram illustrating a way in which liquid levels in a first liquid reservoir and a second liquid reservoir have been aligned;
Fig. 13 is a control flowchart of a control unit according to a fifth exemplary embodiment of the present invention;
Fig. 14A is a schematic diagram to explain a way in which liquid levels in a first liquid reservoir and a second liquid reservoir according to a fifth exemplary embodiment of the present invention are aligned, and is a diagram illustrating a way in which a migration solution is flowed into a first liquid reservoir;
Fig. 14B is a continuation from Fig. 14A, and is a diagram illustrating a way in which a sample solution is flowed into a second liquid reservoir;
Fig. 14C is a continuation from Fig. 14B, and is a diagram illustrating a way in which a sample solution is discharged from a second opening path and also a migration solution is discharged from a first opening path;
Fig. 14D is a continuation from Fig. 14C, and is a diagram illustrating a way in which liquid levels in a first liquid reservoir and a second liquid reservoir have been aligned;
Fig. 15 is a diagram illustrating a schematic configuration of a component analysis device according to a sixth exemplary embodiment of the present invention;
Fig. 16 is a control flowchart of a control unit according to a sixth exemplary embodiment of the present invention;
Fig. 17A is a schematic diagram to explain a way in which liquid levels are aligned in a first liquid reservoir and a second liquid reservoir according to a sixth exemplary embodiment of the present invention, and is a diagram illustrating a way in which a migration solution is flowed into a first liquid reservoir;
Fig. 17B is a continuation from Fig. 17A, and is a diagram illustrating a way in which a sample solution is flowed into a second liquid reservoir;
Fig. 17C is a continuation from Fig. 17B, and is a diagram illustrating a way in which a sample solution is discharged from a second opening path and also a migration solution is discharged from a first opening path; and
Fig. 17D is a continuation from Fig. 17C, and is a diagram illustrating a way in which liquid levels in a first liquid reservoir and a second liquid reservoir have been aligned.

### DETAILED DESCRIPTION

Description follows regarding examples of exemplary embodiments of the present invention, with reference to the drawings. Note that the same reference numerals will be appended across the drawings to the same or equivalent configuration elements and components. Moreover, dimensions and proportions in the drawings are exaggerated for ease of explanation, and sometimes differ from actual proportions. In the drawings, arrow U indicates upward, arrow D indicates downward, arrow R indicates a right side, arrow L indicates a left side, arrow B indicates a back side, and arrow F indicates a front side, when looking at a front face of a component analysis device.

Note that in the following explanation, the term "operator" refers to someone who uses a capillary electrophoresis analysis device to analyze components contained in a sample solution.

### First Exemplary Embodiment

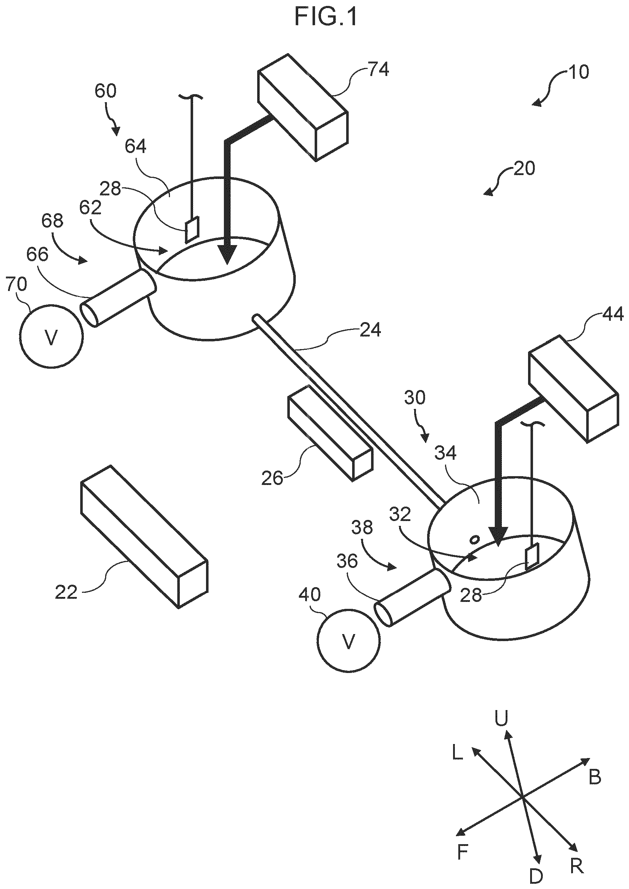

Description follows regarding a first exemplary embodiment of technology according to the present invention, with reference to Fig. 1 to Fig. 3F as appropriate.

### Configuration

Fig. 1 is a schematic configuration diagram of a capillary electrophoresis analysis device 10 according to the first exemplary embodiment of the present invention. As illustrated in Fig. 1, the capillary electrophoresis analysis device 10 includes a first supply unit 44, a second supply unit 74, an electrophoresis unit 20, and a control unit 22. Note that the capillary electrophoresis analysis device 10 is an example of a "component analysis device" according to the present exemplary embodiment.

The first supply unit 44 is a device employed in the capillary electrophoresis analysis device 10 according to the present exemplary embodiment to supply a migration solution RS into a first inflow path 34 of the electrophoresis unit 20, and is controlled by the control unit 22, described later. The first supply unit 44 may be any device capable of supplying the migration solution RS at an amount desired by the operator, and examples thereof include a pump such as a peristaltic pump, and a dropping device such as an electric pipette. Moreover, although any solution may be employed as the migration solution RS, examples thereof include a buffer solution, such as a phosphate buffered physiological saline or the like, that acts as a buffer to components contained in a sample solution SS. Note that the first supply unit 44 may be an embodiment in which supply of the migration solution RS is controlled by a non-illustrated valve provided between itself and the first inflow path 34, described later.

The second supply unit 74 is a device for supplying the sample solution SS to be analyzed in the capillary electrophoresis analysis device 10 according to the present exemplary embodiment into a second inflow path 64 of the electrophoresis unit 20, and is controlled by the control unit 22, described later. Namely, the second supply unit 74 may be configured similarly to the first supply unit 44, except in the type of solution being supplied thereby. Moreover, although any solution may be employed as the sample solution SS, an example thereof is a biological sample, including blood components as an example. Note that the second supply unit 74 may be an embodiment in which supply of the sample solution SS is controlled by a non-illustrated valve provided between itself and a second inflow path 64, described later.

The first supply unit 44 and the second supply unit 74 are examples of a "supply unit" according to the present exemplary embodiment. The sample solution SS and the migration solution RS are examples of "solution" according to the present exemplary embodiment.

As illustrated in Fig. 1, the electrophoresis unit 20 includes a first flow path 30, a second flow path 60, a capillary 24, a detector 26, and a pair of electrodes 28.

As illustrated in Fig. 1, the first flow path 30 includes a first liquid reservoir 32, and a first outflow path 36 that opens externally from a side wall face in the first liquid reservoir 32. A first flow path valve 40 is provided on the opposite side of the first outflow path 36 to the first liquid reservoir 32.

As illustrated in Fig. 1, the first liquid reservoir 32 is a circular shaped indented portion of a bottom face of the first flow path 30. An upper side of the first liquid reservoir 32 is configured by the first inflow path 34 for flow of the migration solution RS. One end of the capillary 24, described later, is connected as an opening at a bottom face side of the first liquid reservoir 32. Note that in the present exemplary embodiment the shape of the first liquid reservoir 32 is not limited to the bottom face indented with a circular shape, and the bottom face may be configured with a polygonal shape. Moreover, the upper side of the bottom face side (namely, the first inflow path 34) may configured with a different shape.

Moreover as illustrated in Fig. 1, one out of a pair of electrodes 28 is disposed in the first liquid reservoir 32. A voltage is applied to the electrode 28 by the control unit 22 in capillary 24 electrophoresis analysis, described later.

The first outflow path 36 is a portion connecting the first liquid reservoir 32 to the outside of the electrophoresis unit 20, and by extending sideways within the vertical direction range of the first liquid reservoir 32, is able to pass solution from the first liquid reservoir 32 to outside of the electrophoresis unit 20. In other words, as illustrated in Fig. 1, the first outflow path 36 that opens externally extends in a horizontal direction from a side wall face of the first liquid reservoir 32. The first flow path valve 40 is provided at an external-side end of the first outflow path 36 (the front side illustrated in Fig. 1), and enables solution to be stopped from flowing outside from the first liquid reservoir 32 side through the first outflow path 36.

Note that an upper side of the first inflow path 34 according to the present exemplary embodiment opens externally, as illustrated in Fig. 1. In other words, in the first liquid reservoir 32 according to the present exemplary embodiment, the migration solution RS is able to be flowed into the first flow path 30 from above using a dropping member such as a pipette.

Note that the first flow path 30 is an example of a "first flow path" according to the present exemplary embodiment. Namely, the first liquid reservoir 32, the first inflow path 34, the first outflow path 36, and the first flow path valve 40 according to the present exemplary embodiment are, respectively, examples of a "first liquid reservoir", a "first inflow path", a "first outflow path", and a "valve for stopping flow of solution".

As illustrated in Fig. 1, the second flow path 60 includes a second liquid reservoir 62, and a second outflow path 66 that opens externally from a side wall face in the second liquid reservoir 62. A second flow path valve 70 is provided at the opposite side of the second outflow path 66 to the second liquid reservoir 62.

Namely, the second flow path 60 is a portion configured with a similar shape to the first flow path 30 on the opposite side of the capillary 24 to the first flow path 30. In other words, the second flow path 60, the second liquid reservoir 62, the second inflow path 64, the second outflow path 66, and the second flow path valve 70 are portions respectively corresponding to the first flow path 30, the first liquid reservoir 32, the first inflow path 34, the first outflow path 36, and the first flow path valve 40.

Note that the second flow path 60 is an example of a "second flow path" according to the present exemplary embodiment. Namely, the second liquid reservoir 62, the second inflow path 64, the second outflow path 66, and the second flow path valve 70 according to the present exemplary embodiment are, respectively, examples of a "second liquid reservoir", a "second inflow path", a "second outflow path", and a "valve for stopping flow of solution".

The capillary 24 is a tube-shaped portion connecting the first liquid reservoir 32 and the second liquid reservoir 62 together as illustrated in Fig. 1. The capillary 24 is not limited to any particular shape as long as it has a small enough diameter such that the sample solution SS and the migration solution RS exhibit capillary action therein and, as an example, has a circular profile with a diameter of from 25 µm to the 100 µm, or a rectangular profile with sides of from 25 µm to 100 µm. Note that the capillary 24 according to the present exemplary embodiment is formed from a transparent (namely, light transmitting, e.g. visible light transmitting) material such as glass, acrylic, or the like.

The detector 26 is controlled by the control unit 22, and is a device for detecting components contained in the solution positioned inside the capillary 24. The detector 26 is for example, a light absorption meter that measures light absorption of the solution positioned inside the capillary 24 by, for example, emitting light from a non-illustrated light source and measuring the amount of light transmitted by the capillary 24.

Note that in the present exemplary embodiment the sample solution SS is flowed to the second liquid reservoir 62, and upstream when the second flow path valve 70 has been opened in a state in which the liquid level LH (position H in the vertical direction of the liquid surface of the solution) is higher than the first outflow paths 36, 66, the sample solution SS flows externally until at the position H in the vertical direction of the second outflow path 66. Moreover, in the present exemplary embodiment, the migration solution RS is flowed into the first liquid reservoir 32, and downstream when the first flow path valve 40 has been opened in a state in which the liquid level LH is higher than the first outflow paths 36, 66, the migration solution RS flows externally until at the position H in the vertical direction of the first outflow path 36. In other words, the first outflow path 36 opens externally to adjust the liquid level LH of the migration solution RS of the first liquid reservoir 32 to a determined position that is the position H, and equalizes pressure of the liquid surface inside the first liquid reservoir 32 to the external pressure. Moreover, the second outflow path 66 opens externally to adjust the liquid level LH of the sample solution SS of the second liquid reservoir 62 to a determined position that is the position H, and equalizes pressure of the liquid surface inside the second liquid reservoir 62 to the external pressure.

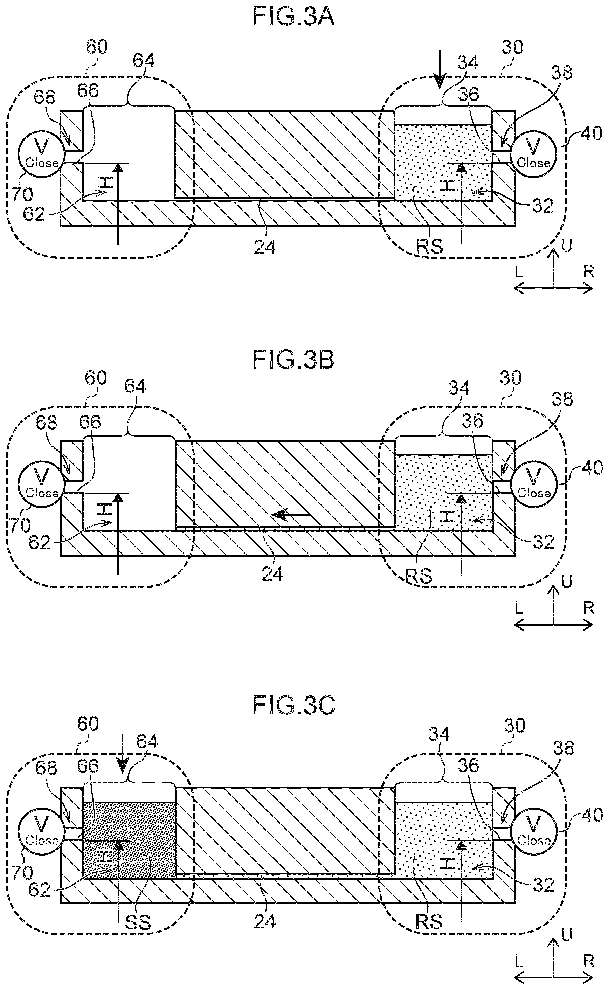

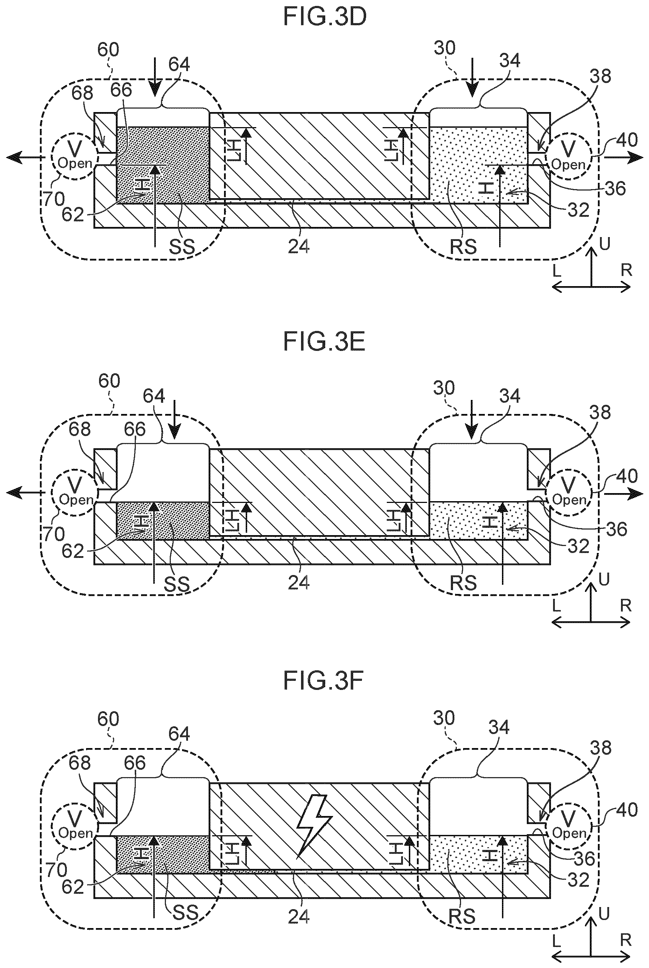

Moreover, as illustrated in Fig. 1 and Fig. 3, in the present exemplary embodiment, the second outflow path 66 and the first outflow path 36 have equal positions H in the vertical direction. This means that in a state in which the second flow path valve 70 and the first flow path valve 40 have been opened, the liquid level LH of the sample solution SS flowed into the second liquid reservoir 62 is equalized to the liquid level LH of the migration solution RS flowed into the first liquid reservoir 32. Namely, in the present exemplary embodiment the second outflow path 66 is an example of a "second liquid level adjustment section", and the first outflow path 36 is an example of a "first liquid level adjustment section".

Note that the electrophoresis unit 20 in the present exemplary embodiment may be configured so as to be attachable/detachable to, or replaceable in, the capillary electrophoresis analysis device 10, or so as to be provided fixed to the capillary electrophoresis analysis device 10. In either case, a first liquid level adjustment section 38 and a second liquid level adjustment section 68 are configured so as to equalize the positions H in the vertical direction in a state in which the electrophoresis unit 20 has been attached to the capillary electrophoresis analysis device 10.

Note that in the following description reference is made with joint reference numerals simply to flow paths 30, 60 when not discriminating between the first flow path 30 and the second flow path 60. Similarly, reference is made with joint reference numerals to flow paths 30, 60, liquid reservoirs 32, 62, inflow paths 34, 64, outflow paths 36, 66, liquid level adjustment sections 38, 68, and flow path valves 40, 70 when not particularly discriminating between each configuration of the first flow path 30 and each configuration of the second flow path 60. Similarly, reference is made with joint reference numerals to supply units 44, 74 when not particularly discriminating between the first supply unit 44 and the second supply unit 74.

The control unit 22 is a device that controls each configuration of the electrophoresis unit 20, the electrodes 28, and the supply units 44, 74. The control unit 22 may have any appropriate configuration, and an example thereof is a device including a CPU, ROM, and RAM, with various control operations performed by the CPU reading and executing a program stored on the ROM.

More specifically, the control unit 22 performs electrophoresis of the components in the sample solution SS from the second liquid reservoir 62 to the first liquid reservoir 32 by applying a predetermined voltage to the electrodes 28 in a state in which the sample solution SS has been flowed into the second liquid reservoir 62, and the migration solution RS has been flowed inside the first liquid reservoir 32 and the capillary 24. The control unit 22 measures the concentration and type of components in the sample solution SS flowing through the capillary 24 by using the detector 26 to perform absorption analysis on the solution flowing through the capillary 24.

Generally in capillary electrophoresis analysis, the liquid levels LH are preferably equal at the two ends of the capillary 24, namely in the first liquid reservoir 32 and the second liquid reservoir 62. More specifically, the heights of the liquid surfaces are preferably equal for the migration solution RS standing in the first liquid reservoir 32 and for the sample solution SS standing in the second liquid reservoir 62 prior to performing electrophoresis.

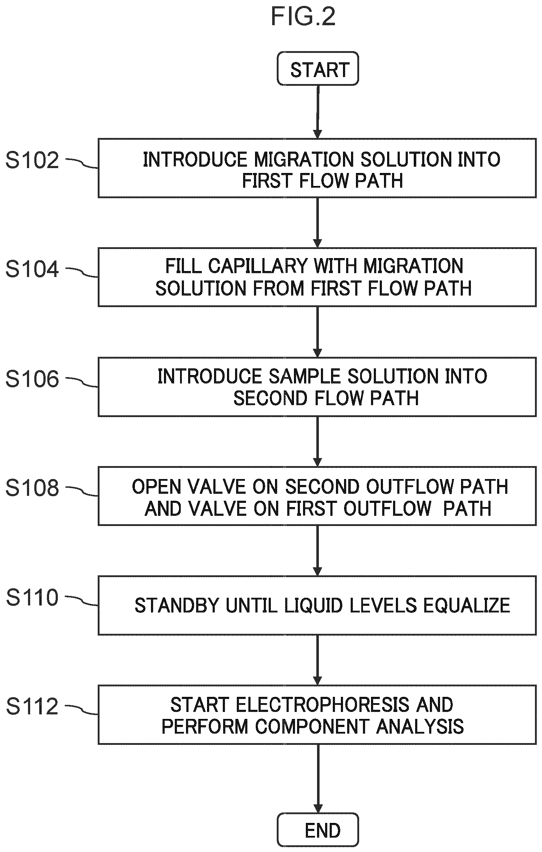

Processes of an electrophoresis method according to the present exemplary embodiment will now be described with reference to Fig. 2 to Fig. 3F. Note that Fig. 3A to Fig. 3F illustrate positional relationships in the vertical direction between each configuration in the flow paths 30, 60, the flow path valves 40, 70, and the capillary 24, and other configuration is sometimes omitted.

### Electrophoresis Method

The control unit 22 according to the present exemplary embodiment executes the processes illustrated in Fig. 2 in sequence by executing a non-illustrated program.

First at step S102, the control unit 22 drives the first supply unit 44 and introduces the migration solution RS into the first flow path 30, as illustrated in Fig. 3A. More specifically, as illustrated in Fig. 3A, the control unit 22 supplies the migration solution RS until the liquid level LH of the migration solution RS in the first liquid reservoir 32 is higher than the first outflow path 36. Note that the control unit 22 stops driving of the first supply unit 44 after the liquid level LH of the migration solution RS has become higher than the first outflow path 36.

Next at step S104, the control unit 22 fills the capillary 24 with the migration solution RS from the first flow path 30, as illustrated in Fig. 3B. Note that in the present exemplary embodiment, the migration solution RS fills the capillary 24 under capillary action. In other words, the control unit 22 waits on standby until the migration solution RS standing in the first liquid reservoir 32 has filled the capillary 24.

Next at step S106, the control unit 22 drives the second supply unit 74, and introduces the sample solution SS into the second flow path 60, as illustrated in Fig. 3C. More specifically, as illustrated in Fig. 3C, the control unit 22 supplies the sample solution SS until the liquid level LH of the sample solution SS in the second liquid reservoir 62 has become higher than the second outflow path 66. Note that the control unit 22 stops driving of the second supply unit 74 when the liquid level LH of the sample solution SS has become higher than the second outflow path 66.

Next, at step S108, the control unit 22 opens the flow path valves 40, 70 provided to the outflow paths 36, 66 as illustrated in Fig. 3D, and discharges the migration solution RS and the sample solution SS respectively from the outflow paths 36, 66.

Next at step S110, the control unit 22 waits on standby until the liquid levels LH of the migration solution RS and the sample solution SS inside the flow paths 30, 60 have equalized under gravity, as illustrated in Fig. 3E. More specifically, the control unit 22 waits on standby until the liquid levels LH of the migration solution RS and the sample solution SS standing in the liquid reservoirs 32, 62 are equal to the position H in the vertical direction of the outflow paths 36, 66. Note that the period of time that the control unit 22 is on standby may be predetermined, or a non-illustrated liquid level measurement instrument may be provided to the liquid reservoirs 32, 62, and the period of time determined by the control unit 22 based on values of the liquid levels LH obtained from the liquid level measurement instrument. Note that in cases in which the viscosity of the migration solution RS and/or the sample solution SS is high, instead of waiting on standby until the liquid levels LH equalize under gravity, compressed air may be supplied from the inflow paths 34, 64, and the migration solution RS and/or the sample solution SS forcibly discharged from the outflow paths 36, 66. In such cases a non-illustrated pressure pump or the like is connected to the inflow paths 34, 64.

Next at step S112, the control unit 22 applies a voltage to the pair of electrodes 28 arranged in the second flow path 60 and the first flow path 30 as illustrated in Fig. 3F, and starts electrophoresis. Moreover, the control unit 22 measures the concentration and type of components contained in the sample solution SS by using the detector 26 to measure components of the fluid moving through the capillary 24 under electroosmotic flow.

In the present exemplary embodiment the liquid levels LH at the two ends of the capillary 24 are adjusted by the above processes. Namely, in the present exemplary embodiment, step S102 is an example of a "process of causing a solution to flow from a first inflow path", step S106 is an example of a "process of causing the solution to flow from a second inflow path", and step S104 is an example of a "process of filling a capillary leading from the first liquid reservoir to the second liquid reservoir with the solution ". Moreover, in the present exemplary embodiment, step S110 is an example of a "pressure equalization process that is a process of using the first liquid level adjustment section and the second liquid level adjustment section to equalize vertical direction positions of liquid surfaces of standing solutions in the first liquid reservoir and the second liquid reservoir", and step S112 is an example of a "process of performing electrophoresis with respect to components contained in the solution inside the capillary".

Note that at step S112, measurement of the concentration and type of components contained in the sample solution SS may be optional. Namely, the electrophoresis method described in the present exemplary embodiment does not necessarily contain a process to perform component analysis.

The capillary electrophoresis analysis device 10, the electrophoresis unit 20, and the electrophoresis method according to the present exemplary embodiment enable the following operation and advantageous effects to be obtained.

### Operation and Advantageous Effects

The electrophoresis unit 20 of the present exemplary embodiment includes the first flow path 30 including the first liquid level adjustment section 38 that opens externally and equalizes the pressure of the first liquid reservoir 32 to the external pressure, and the second flow path 60 including the second liquid level adjustment section 68 that opens externally and equalizes the pressure of the second liquid reservoir 62 to the external pressure. Moreover, in the electrophoresis unit 20 of the present exemplary embodiment, the positions H in the vertical direction are equal to each other in the first liquid level adjustment section 38 and in the second liquid level adjustment section 68.

In the electrophoresis unit 20 according to the present exemplary embodiment, due to the externally open first liquid level adjustment section 38 and second liquid level adjustment section 68 having positions H in the vertical direction equal to each other, the standing liquid levels LH in the first liquid reservoir 32 and the second liquid reservoir 62 are equal to each other. The electrophoresis unit 20 according to the present exemplary embodiment thereby enables the fluid pressures acting at the two ends of the capillary 24 to be aligned using a simple mechanism.

Moreover, in the electrophoresis unit 20 of the present exemplary embodiment, the outflow paths 36, 66 function as liquid level adjustment sections 38, 68 by extending sideways in a vertical direction range of the liquid reservoirs 32, 62. This thereby enables the liquid levels LH at the two ends of the capillary 24 to be matched with a simple mechanism, and for the fluid pressures acting at the two ends of the capillary 24 to be aligned.

Moreover, the electrophoresis unit 20 according to the present exemplary embodiment further includes the detector 26 that detects components of the solution flowing inside the capillary 24. The electrophoresis unit 20 according to the present exemplary embodiment is accordingly able to detect components of the sample solution SS flowing inside the capillary 24 due to being equipped with the detector 26.

Moreover, the capillary electrophoresis analysis device 10 of the present exemplary embodiment includes the control unit 22, the electrophoresis unit 20, and the supply units 44, 74 for supplying the sample solution SS to the electrophoresis unit 20. This accordingly means that the capillary electrophoresis analysis device 10 according to the present exemplary embodiment raises the accuracy of component analysis with the capillary electrophoresis method due to the fluid pressures acting at the two ends of the capillary 24 being aligned with the simple mechanism.

Moreover, the electrophoresis method of the present exemplary embodiment includes the process of flowing the migration solution RS from the first inflow path 34 into the first liquid reservoir 32 of the first flow path 30 including the first liquid level adjustment section 38 that opens externally and equalizes the pressure of the first liquid reservoir 32 to the external pressure and has an equal position H in the vertical direction to that of the second liquid level adjustment section 68. Moreover, the electrophoresis method of the present exemplary embodiment includes the process of flowing the sample solution SS from the second inflow path 64 into the second liquid reservoir 62 of the second flow path 60 including the second liquid level adjustment section 68 that opens externally and equalizes the pressure of the second liquid reservoir 62 to the external pressure. The electrophoresis method of the present exemplary embodiment also includes the process of filling the capillary 24 communicating from the first liquid reservoir 32 to the second liquid reservoir 62 with the migration solution RS, and the pressure equalization process that is the process of using the first liquid level adjustment section 38 and the second liquid level adjustment section 68 to equalize the positions H in the vertical direction of the liquid surface of the solutions standing in the first liquid reservoir 32 and the second liquid reservoir 62. The electrophoresis method of the present exemplary embodiment includes the process of performing electrophoresis of the components contained in the sample solution SS inside the capillary 24 using the electrodes 28 respectively disposed inside the first flow path 30 and inside the second flow path 60.

In the electrophoresis method according to the present exemplary embodiment, due to the first liquid level adjustment section 38 and the second liquid level adjustment section 68 that open externally and have positions H in the vertical direction that are the same as each other, the liquid levels LH standing in the first liquid reservoir 32 and the second liquid reservoir 62 also equalize. The electrophoresis method according to the present exemplary embodiment is accordingly able to align the fluid pressure acting on the sample solution SS and the migration solution RS at the two ends of the capillary 24 using a simple mechanism, enabling raised accuracy of electrophoresis of components contained in the sample solution SS.

Moreover, in the electrophoresis method of the present exemplary embodiment, in the process to equalize the positions H in the vertical direction of the liquid surfaces of the solutions, the solutions are flowed from the outflow paths 36, 66 functioning as the liquid level adjustment sections 38, 68 that extend sideways in a vertical direction range of the liquid reservoirs 32, 62, adjusting the positions H in the vertical direction of the liquid surfaces of the standing solutions in the liquid reservoirs 32, 62. The electrophoresis method according to the present exemplary embodiment accordingly matches the liquid levels LH at the two ends of the capillary 24 using the outflow paths 36, 66 that are the liquid level adjustment sections 38, 68, and enables the fluid pressures acting at the two ends of the capillary 24 to be aligned.

Moreover, the electrophoresis method of the present exemplary embodiment includes the process of analyzing the components inside the capillary 24 by using the detector 26 to detect the components of the solution flowing in the capillary 24. The electrophoresis method according to the present exemplary embodiment accordingly aligns the fluid pressures acting at the two ends of the capillary 24 using a simple mechanism, and thereby raises the accuracy of component analysis by the capillary electrophoresis method. Moreover, in other words, the electrophoresis method of the present exemplary embodiment is able to perform analysis by electrophoresis without needing precise control even if introduced amounts of the sample solution SS and the migration solution RS, which are respectively introduced to the first liquid reservoir 32 and the second liquid reservoir 62, differ from each other.

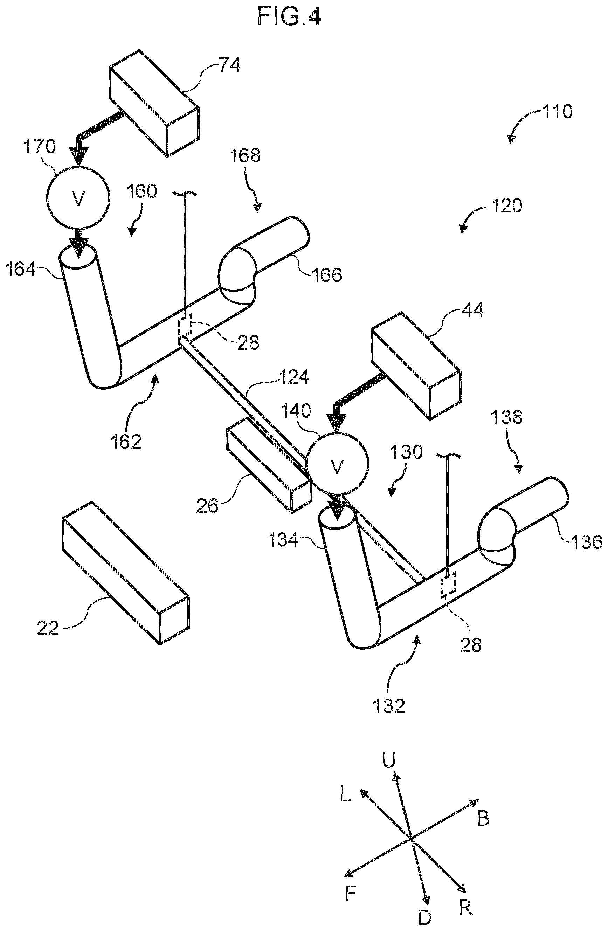

Description next follows regarding a capillary electrophoresis analysis device 110 according to a second exemplary embodiment of the present invention, with reference to Fig. 4 to Fig. 6C. Note that the same reference numerals to those of the first exemplary embodiment will be appended to configuration in the capillary electrophoresis analysis device 110 according to the second exemplary embodiment that is similar to that of the first exemplary embodiment, and specific description will be omitted thereof.

### Second Exemplary Embodiment

### Configuration

The present exemplary embodiment differs from the first exemplary embodiment in the shapes of inflow paths 134, 164, outflow paths 136, 166, and liquid reservoirs 132, 162, as illustrated in Fig. 4.

In the present exemplary embodiment the inflow paths 134, 164 are tube-shaped liquid through paths extending in the vertical direction as illustrated in Fig. 4. Moreover, in the capillary electrophoresis analysis device 110 flow path valves 140, 170 are provided at the open ends of flow paths 130, 160 at the upstream side of the inflow paths 134, 164. The migration solution RS or the sample solution SS supplied from supply units 44, 74 is flowed into the inflow paths 134, 164 through the flow path valves 140, 170.

Moreover, in the present exemplary embodiment the outflow paths 136, 166 each extend in a horizontal direction as illustrated in Fig. 4. The outflow paths 136, 166 of the present exemplary embodiment externally open the flow paths 130, 160 on the opposite side to the liquid reservoirs 132, 162, and the pressures at the open ends thereof are equal to atmospheric pressure outside the flow paths 130, 160. In other words, the pressures at the openings on the downstream side of the outflow paths 136, 166 are equal to the atmospheric pressure.

Note that the liquid reservoirs 132, 162 in the present exemplary embodiment extend in a horizontal direction from a downstream side of the inflow paths 134, 164 to the upstream side of the outflow paths 136, 166, and also extends upward at the downstream side, as illustrated in Fig. 4. In other words, the liquid reservoirs 132, 162 in the present exemplary embodiment are configured as bottom portions of the flow paths 130, 160 configured with substantially U-shaped profiles. A capillary 124 connects the liquid reservoirs 132, 162 together.

Note that in the present exemplary embodiment, the migration solution RS or the sample solution SS are supplied from the supply units 44, 74 into the inflow paths 134, 164, and flow to outside in sequence through the inflow paths 134, 164, the liquid reservoirs 132, 162, and the outflow paths 136, 166. In the present exemplary embodiment, when the migration solution RS or the sample solution SS have been supplied from the supply units 44, 74 into the inflow paths 134, 164, the inflow paths 134, 164 and the liquid reservoirs 132, 162 are all portions filled with the migration solution RS or the sample solution SS. Note that in the present exemplary embodiment, the liquid surfaces of the migration solution RS or the sample solution SS may be partway along the outflow paths 136, 166. In other words, the outflow paths 136, 166 are not necessarily completely filled by the migration solution RS or the sample solution SS.

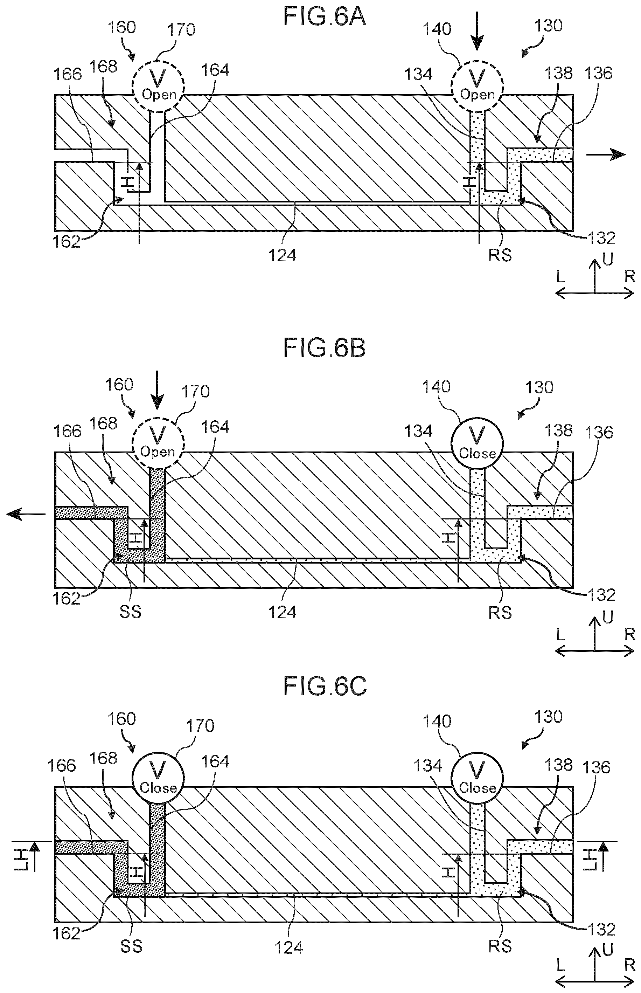

Moreover, for the inflow paths 134, 164 in the present exemplary embodiment, flow of solution inside the inflow paths 134, 164 is stopped in a closed state of the flow path valves 140, 170. More specifically, in a closed state of the flow path valves 140, 170, ambient air no longer flows from outside to inside the inflow paths 134, 164, and flow of solution inside the flow paths 130, 160 is stopped (see Fig. 6B or the like, as described later).

Note that in the present exemplary embodiment, the positions H in the vertical direction of the first outflow path 136 and the second outflow path 166 are equal, as illustrated in Fig. 6B, described later. This means that in the present exemplary embodiment too, the first outflow path 136 configures (acts as, or provides) a first liquid level adjustment section 138, and the second outflow path 166 configures (acts as, or provides) a second liquid level adjustment section 168. Namely, in the present exemplary embodiment too, the first outflow path 136 is an example of a "first liquid level adjustment section" and the second outflow path 166 is an example of a "second liquid level adjustment section". Other configuration is similar to that of the first exemplary embodiment.

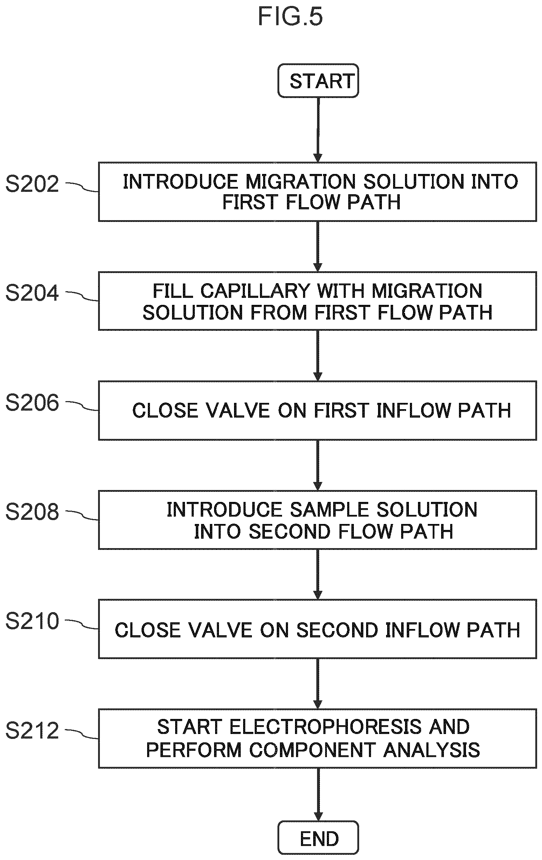

Next, description follows regarding processes of the electrophoresis method according to the present exemplary embodiment, with reference to Fig. 5 to Fig. 6C. Note that in Fig. 6C, the positional relationships in the vertical direction are illustrated for each configuration of the flow paths 130, 160, the flow path valves 140, 170, and the capillary 124, and sometimes other configuration is omitted.

### Electrophoresis Method

The control unit 22 according to the present exemplary embodiment sequentially executes the processes illustrated in Fig. 5 by executing a non-illustrated program.

First at step S202, the control unit 22 drives the first supply unit 44, and introduces the migration solution RS into a first flow path 130, and fills the first inflow path 134, the first liquid reservoir 132, and the first outflow path 136 with the migration solution RS, as illustrated in Fig. 6A.

Next, at step S204 the control unit 22 fills the capillary 124 with the migration solution RS from the first flow path 130. Note that in the present exemplary embodiment the migration solution RS fills the capillary 124 under capillary action. In other words, the control unit 22 waits on standby until the migration solution RS standing in the first liquid reservoir 132 has filled the capillary 124.

Next, at step S206, the control unit 22 closes the first flow path valve 140 as well as stopping the driving of the first supply unit 44.

Next, at step S208, the control unit 22 drives the second supply unit 74, introduces the sample solution SS into the second flow path 160, and fills the second inflow path 164, second liquid reservoir 162, and the second outflow paths 166 with the sample solution SS, as illustrated in Fig. 6B.

Next, at step S210, the control unit 22 closes the second flow path valve 170 as well as stopping the driving of the second supply unit 74, as illustrated in Fig. 6C. Moreover, in the present exemplary embodiment, the liquid levels LH of the migration solution RS and the sample solution SS equalize in a state in which the flow path valves 140, 170 are closed, as illustrated in Fig. 6C.

Next, at step S212, the control unit 22 applies a voltage to a pair of electrodes 28 arranged in the second flow path 160 and the first flow path 130, and starts electrophoresis. Moreover, the control unit 22 measures the concentration and type of components contained in the sample solution SS by using the detector 26 to measure components of the fluid moving through the capillary 124 under electroosmotic flow.

In the present exemplary embodiment, the liquid levels LH at the two ends of the capillary 124 are adjusted by performing the above processes. Namely, in the present exemplary embodiment, step S202 is an example of a "process of causing a solution to flow from a first inflow path", step S208 is an example of a "process of causing the solution to flow from a second inflow path", and step S204 is an example of a "process of filling a capillary leading from the first liquid reservoir to the second liquid reservoir with the solution". Moreover, in the present exemplary embodiment, step S206 and step S210 are together an example of a "pressure equalization process that is a process of using the first liquid level adjustment section and the second liquid level adjustment section to equalize vertical direction positions of liquid surfaces of standing solutions in the first liquid reservoir and the second liquid reservoir", and step S212 is an example of a "process of performing electrophoresis with respect to components contained in the solution inside the capillary ".

The component analysis device and electrophoresis method according to the present exemplary embodiment enable the following operation and advantageous effects to be obtained.

### Operation and Advantageous Effects

The electrophoresis unit 120 of the present exemplary embodiment includes the inflow paths 134, 164 with the flow path valves 140, 170 to stop flow of solution flowing into the liquid reservoirs 132, 162 from above. Thus due to the flow path valves 140, 170 stopping the solutions of the inflow paths 134, 164, the liquid height inside the inflow paths 134, 164 no longer has an effect on the fluid pressure inside the liquid reservoirs 132, 162. In other words, since the pressure acting on the solution inside the liquid reservoirs 132, 162 depends on external pressure and the liquid height inside the outflow paths 136, 166, the pressure acting on the solution inside the second liquid reservoir 162 becomes the same as the pressure acting on the solution inside the first liquid reservoir 132.

The electrophoresis unit 120 according to the present exemplary embodiment enables the fluid pressures applied at the two ends of the capillary 124 to be aligned without discharging solution inside the flow paths 130, 160 in the liquid reservoirs 132, 162 from the inflow paths 134, 164.

Moreover, in the electrophoresis method of the present exemplary embodiment, the pressure equalization process uses the flow path valves 140, 170 that are provided to the inflow paths 134, 164 to stop the flow of solution flowing into the liquid reservoirs 132, 162 from above, and stops the flow of solution inside the inflow paths 134, 164. This means that due to the solutions of the inflow paths 134, 164 being stopped by the flow path valves 140, 170, there is no longer an effect on the fluid pressure inside the liquid reservoirs 132, 162.
In other words, due to the pressure acting on the solution inside the liquid reservoirs 132, 162 depending on the external pressure and the liquid height inside the outflow paths 136, 166, the pressure acting on the solution inside the second liquid reservoir 162 becomes the same as the pressure acting on the solution inside the first liquid reservoir 132.

The electrophoresis method according to the present exemplary embodiment thereby enables the fluid pressures acting at the two ends of the capillary 124 to be aligned without discharging solution inside the flow paths 130, 160 in the liquid reservoirs 132, 162 from the inflow paths 134, 164.

As described above, the flow path valves 140, 170 are provided to the capillary electrophoresis analysis device 110, however there is no limitation thereto, and the electrophoresis unit 120 may include the flow path valves 140, 170. Namely, the flow path valves 140, 170 may be provided on the inflow paths 134, 164.

Moreover, the present exemplary embodiment is configured similarly to the first exemplary embodiment, and so similar operation and advantageous effects can be obtained to those of the first exemplary embodiment.

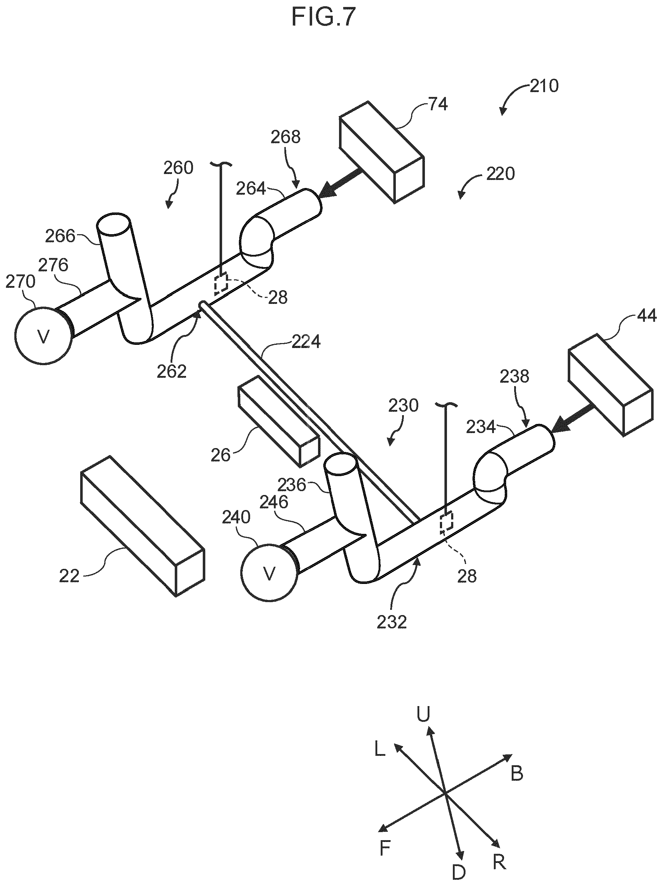

Next, description follows regarding a capillary electrophoresis analysis device 210 according to a third exemplary embodiment of the present invention, with reference to Fig. 7 to Fig. 10. Note that the same reference numerals to those of the first exemplary embodiment will be appended to configuration of the capillary electrophoresis analysis device 210 according to the third exemplary embodiment similar to that of the first exemplary embodiment, and specific description will be omitted thereof.

### Third Exemplary Embodiment

### Configuration

The present exemplary embodiment differs from the first exemplary embodiment or the second exemplary embodiment in the shapes of inflow paths 234, 264, outflow paths 236, 266, and liquid reservoirs 232, 262, as illustrated in Fig. 7.

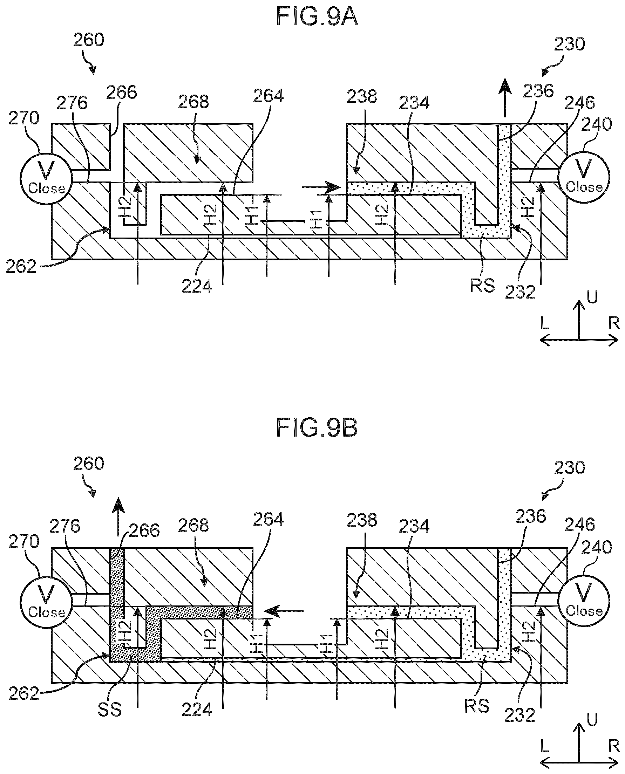

In the present exemplary embodiment the inflow paths 234, 264 are tube-shaped liquid through paths extending in the horizontal direction as illustrated in Fig. 7. Moreover, the inflow paths 234, 264 open externally at the opposite side of the flow paths 230, 260 to liquid reservoirs 232, 262, and the pressure at the open ends thereof is equal to the atmospheric pressure outside the flow paths 230, 260. In other words, the pressures at first openings of the outflow paths 236, 266 are equal to the atmospheric pressure. Moreover, in the present exemplary embodiment, positions H1 in the vertical direction of the inflow paths 234, 264 are lower than positions H2 in the vertical direction of outflow paths 236, 266 (see Fig. 9A to Fig. 9E and the like described later).

Note that the inflow paths 234, 264 in the present exemplary embodiment have non-illustrated tubular bodies or the like connected thereto when supplying the migration solution RS or the sample solution SS from the supply units 44, 74. Note that the non-illustrated tubular bodies or the like are removed from the inflow paths 234, 264 in a state in which supply of the migration solution RS or the sample solution SS from the supply units 44, 74 has been stopped, with the inflow paths 234, 264 being open externally.

Moreover, in the present exemplary embodiment, outflow paths 236, 266 extend in a vertical direction as illustrated in Fig. 7, and are also branched in the horizontal direction. The portions branched from the outflow paths 236, 266 and extending in the horizontal direction configure opening paths 246, 276. Namely, a first opening path 246 is an example of a "first opening path" in the present exemplary embodiment, and a second opening path 276 is an example of a "second opening path" in the present exemplary embodiment. Moreover, in the capillary electrophoresis analysis device 210, flow path valves 240, 270 are provided to the opening paths 246, 276 on the opposite side to the outflow paths 236, 266. The opposite sides of the flow path valves 240, 270 to the flow paths 230, 260 (to the capillary electrophoresis analysis device 210 side) open externally, and the pressure at the open ends of the flow paths 230, 260 is equal to the atmospheric pressure in an open state of the flow path valves 240, 270. In other words, in an open state of the flow path valves 240, 270, the pressures inside the opening paths 246, 276 are equal to atmospheric pressure.

Note that the liquid reservoirs 232, 262 in the present exemplary embodiment extend in the horizontal direction from the downstream side of the inflow paths 234, 264 to the upstream side of the outflow paths 236, 266, as illustrated in Fig. 7, and also extend upward at the upstream. In other words, the liquid reservoirs 232, 262 in the present exemplary embodiment configure bottom portions of the flow paths 230, 260 configured with substantially U-shaped profiles. A capillary 224 connects the liquid reservoirs 232, 262 together.

Note that in the present exemplary embodiment, the migration solution RS or the sample solution SS are supplied from the supply units 44, 74 into the inflow paths 234, 264, and flow to outside in sequence through the inflow paths 234, 264, the liquid reservoirs 232, 262, and the outflow paths 236, 266. Moreover, in the present exemplary embodiment, when the migration solution RS or the sample solution SS have been supplied from the supply units 44, 74 into the inflow paths 234, 264, the inflow paths 234, 264, the liquid reservoirs 232, 262, and the outflow paths 236, 266 are all portions respectively filled with the migration solution RS or the sample solution SS.

Moreover, for the opening paths 246, 276 in the present exemplary embodiment, flow of solution inside the opening paths 246, 276 is stopped in a closed state of the flow path valves 240, 270. More specifically, in a closed state of the flow path valves 240, 270, the inside of the opening paths 246, 276 is no longer open externally, and so flow of solution inside the flow paths 230, 260 is stopped (see Fig. 9B or the like, as described later).

Note that in the present exemplary embodiment, the positions H2 at the vertical direction lower sides of the first opening path 246 and the second opening path 276 are equal, as illustrated in Fig. 9B, described later. Moreover, in the present exemplary embodiment, positions H1 at the vertical direction lower side of the first inflow path 234 and the second inflow path 264 are equal as illustrated in Fig. 9B described later. Moreover, in the exemplary embodiment, the positions H2 at the vertical direction upper side of the first inflow path 234 and the second inflow path 264 are equal to the positions H2 at the vertical direction lower side of the first opening path 246 and the second opening path 276. Moreover, in the present exemplary embodiment, the first inflow path 234 configures (acts as, or provides) a first liquid level adjustment section 238, and the second inflow path 264 configures (acts as, or provides) a second liquid level adjustment section 268. Namely, in the present exemplary embodiment, the first inflow path 234 is an example of a "first liquid level adjustment section" and the second inflow path 264 is an example of a "second liquid level adjustment section". Other configuration is similar to that of the first exemplary embodiment.

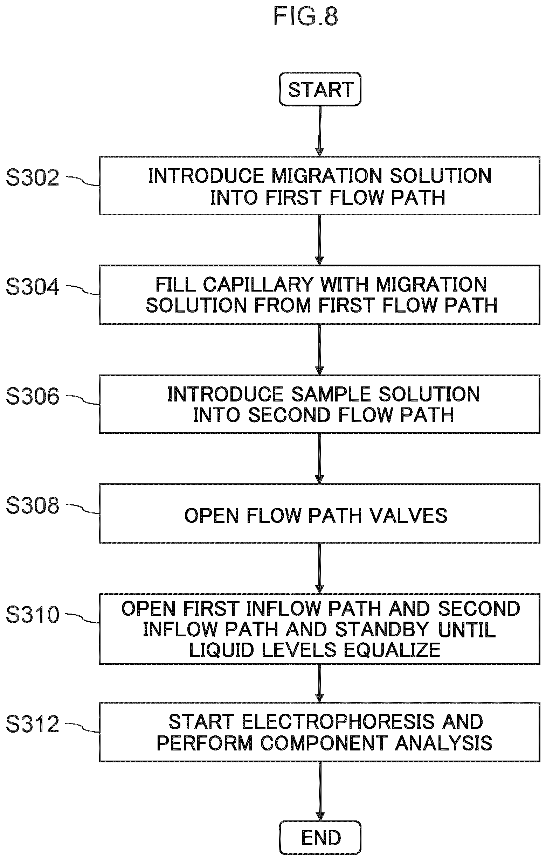

Next, description follows regarding processes of an electrophoresis method according to the present exemplary embodiment, with reference to Fig. 8 to Fig. 9E. Note that Fig. 9A to Fig. 9E illustrate the positional relationships in the vertical direction for each configuration of the flow paths 230, 260, the flow path valves 240, 270, and the capillary 224, and sometimes other configuration is omitted.

### Electrophoresis Method

The control unit 22 according to the present exemplary embodiment sequentially executes the processes illustrated in Fig. 8 by executing a non-illustrated program.

First at step S302, the control unit 22 drives the first supply unit 44, introduces the migration solution RS into a first flow path 230, and fills the first inflow path 234, the first liquid reservoir 232, and the first outflow path 236 with the migration solution RS, as illustrated in Fig. 9A.

Next, at step S304 the control unit 22 fills the capillary 224 with the migration solution RS from the first flow path 230. Note that in the present exemplary embodiment the migration solution RS fills the capillary 224 under capillary action. In other words, the control unit 22 waits on standby until the migration solution RS standing in the first liquid reservoir 232 has filled the capillary 224.

Next, at step S306, the control unit 22 drives the second supply unit 74, introduces the sample solution SS into the second flow path 260, and fills the second inflow path 264, second liquid reservoir 262, and the second outflow paths 266 with the sample solution SS, as illustrated in Fig. 9B.

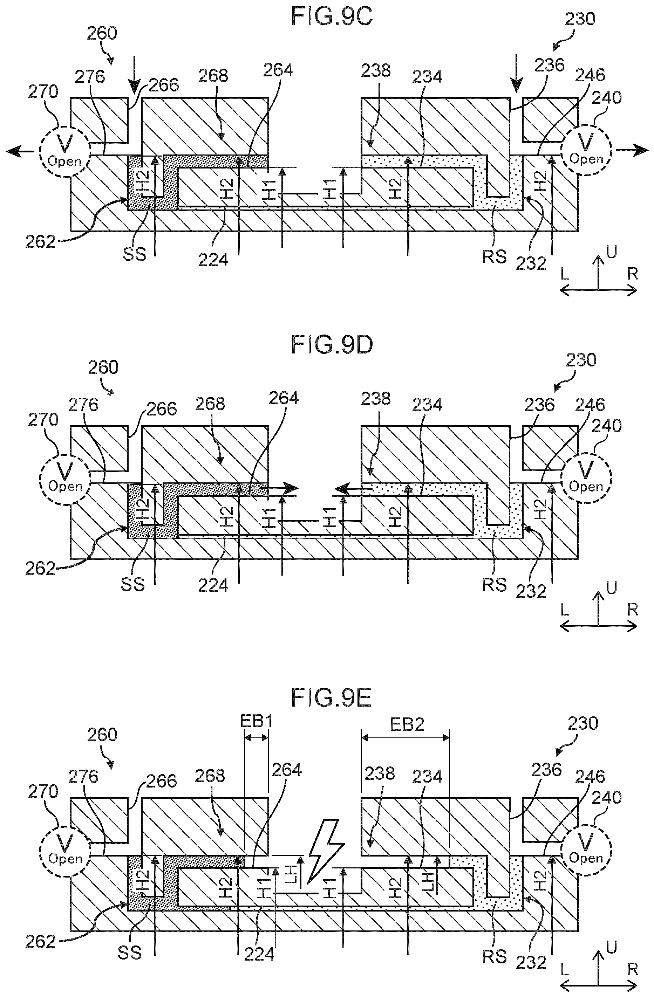

Next, at step S308, the control unit 22 opens the flow path valves 240, 270 as well as stopping driving the second supply units 44, 74, as illustrated in Fig. 9C. Thereby, in the present exemplary embodiment the liquid levels LH of the migration solution RS and the sample solution SS fall to the positions H2 in the vertical direction of the opening paths 246, 276, as illustrated in Fig. 9C. More specifically, in cases in which the viscosity of the migration solution RS or the sample solution SS is low, after the flow path valves 240, 270 have been opened, the liquid levels LH fall under gravity to the positions H2 at the lower side in the vertical direction of the opening paths 246, 276. Note that in cases in which the viscosity of the migration solution RS or the sample solution SS is high, instead of waiting on standby until the liquid levels LH equalize under gravity, compressed air may be supplied from the outflow paths 236, 266, and the migration solution RS and/or the sample solution SS forcibly discharged from the inflow paths 234, 264. In such cases a non-illustrated pressure pump or the like is connected to the outflow paths 236, 266.

Next, at step S310, the control unit 22 takes the non-illustrated tubular bodies off from the second inflow path 264 and the first inflow path 234, and opens externally the inflow paths 234, 264, as illustrated in Fig. 9D. In the present exemplary embodiment, in cases in which the viscosity of the migration solution RS or the sample solution SS is high, as illustrated in Fig. 9D, the liquid surface of the migration solution RS or the sample solution SS is positioned inside the inflow path 234, 264, and so the liquid levels LH are the positions H2 in the vertical direction of the inflow paths 234, 264. In other words, in cases in which the viscosity of the migration solution RS or the sample solution SS is high, the liquid levels LH do not change even when the non-illustrated tubular bodies are removed from the second inflow path 264 and the first inflow path 234. Note that in the present exemplary embodiment, in cases in which the viscosity of the migration solution RS or the sample solution SS is low, then the liquid levels LH fall under gravity to the positions H1 at the lower side in the vertical direction of the inflow paths 234, 264.

Namely, in the present exemplary embodiment, at step S310 standby is performed from when the non-illustrated tubular bodies have been removed from the first inflow path 234 and the second inflow path 264 until confirmed that the height of the liquid levels LH are no longer changing.

Next at step S312, the control unit 22 applies a voltage to the pair of electrodes 28 arranged in the second flow path 260 and the first flow path 230 as illustrated in Fig. 9E, and starts electrophoresis. The control unit 22 measures the concentration and type of components contained in the sample solution SS by using the detector 26 to measure components of the fluid moving through the capillary 224 under electroosmotic flow.

Note that in the present exemplary embodiment, as illustrated in Fig. 9E, the positions H1 in the vertical direction of the inflow paths 234, 264 are equal, and as long as the liquid surfaces of the migration solution RS and sample solution SS are somewhere inside the inflow paths 234, 264, the respective lengths from the open ends to the liquid surfaces do not need to match. For example, in Fig. 9E, a length EB1 from the open end of the second flow path 260 to the liquid surface is shorter than a length EB2 from the open end of the first flow path 230 to the liquid surface.

In the present exemplary embodiment, the liquid levels LH at the two ends of the capillary 224 are adjusted by the processes described above. Namely, in the present exemplary embodiment, step S302 is an example of a "process to flow solution from a first inflow path", step S306 is an example of a "process to flow solution from a second inflow path", and step S304 is an example of a "process of filling a capillary leading from the first liquid reservoir to the second liquid reservoir with the solution". Moreover, in the present exemplary embodiment, the step S308 and the step S310 are together an example of a "pressure equalization process that is a process of using the first liquid level adjustment section and the second liquid level adjustment section to equalize vertical direction positions of liquid surfaces of standing solutions in the first liquid reservoir and the second liquid reservoir", and step S312 is an example of a "process of performing electrophoresis with respect to components contained in the solution inside the capillary ".

The component analysis device and the electrophoresis method according to the present exemplary embodiment can obtain the following operation and advantageous effects.

### Operation and Advantageous Effects

In the electrophoresis unit 220 of the present exemplary embodiment, the inflow paths 234, 264 flow the solutions into the liquid reservoirs 232, 262 from above, and function as the liquid level adjustment sections 238, 268 that open externally. The electrophoresis unit 220 according to the present exemplary embodiment thereby matches the liquid levels LH at the two sides of the capillary 224 with a simple mechanism, enabling the fluid pressures acting at the two ends of the capillary 224 to be aligned.

In the electrophoresis unit 220 according to the present exemplary embodiment, in the pressure equalization process, air is easily discharged from the inflow paths 234, 264 even in cases in which air has been incorporated into the migration solution RS or the sample solution SS for flowing into the inflow paths 234, 264. The electrophoresis unit 220 of the present exemplary embodiment is accordingly able to align the liquid levels LH irrespective of sealing performance at the upstream side of the inflow paths 234, 264.

In the electrophoresis method of the present exemplary embodiment, in the pressure equalization process, the solutions are flowed into the liquid reservoirs 232, 262 from above, and solutions are flowed from the inflow paths 234, 264 that function as the liquid level adjustment sections 238, 268 that open externally. The electrophoresis method according to the present exemplary embodiment thereby matches the liquid levels LH at the two sides of the capillary 224 with a simple mechanism, enabling the fluid pressure acting at the two ends of the capillary 224 to be aligned.

Moreover, in the electrophoresis method according to the present exemplary embodiment, the solutions are flowed from the inflow paths 234, 264 in the pressure equalization process. Air is easily discharged from the inflow paths 234, 264 even in cases in which air has been incorporated into the migration solution RS or the sample solution SS for flowing into the inflow paths 234, 264. The electrophoresis method of the present exemplary embodiment thereby enables the liquid levels LH to be aligned irrespective of sealing performance at the upstream side of the inflow paths 234, 264.

Note that although in the above description the flow path valves 240, 270 are provided to the capillary electrophoresis analysis device 210, there is no limitation thereto, and the electrophoresis unit 220 may include the flow path valves 240, 270. Namely, the flow path valves 240, 270 may be provided to the opening paths 246, 276.

Note that in the present exemplary embodiment too, configuration is similar to that of the first exemplary embodiment or the second exemplary embodiment, and so similar operation and advantageous effects can be obtained to those of the first exemplary embodiment or the second exemplary embodiment.

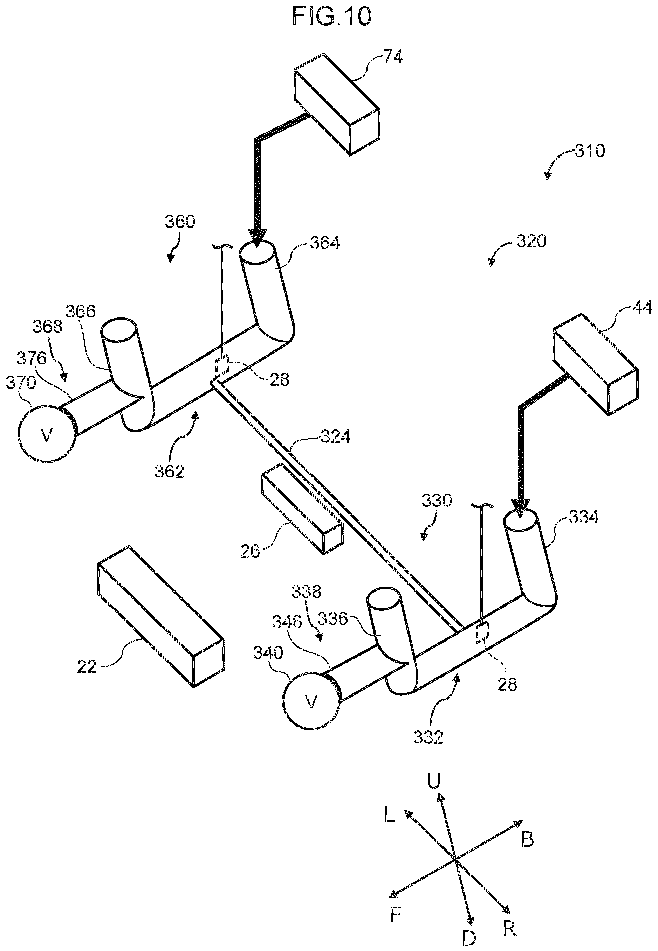

Description continues regarding a capillary electrophoresis analysis device 310 according to a fourth exemplary embodiment of the present invention, with reference to Fig. 10 to Fig. 12D. Note that the same reference numerals to those of the first exemplary embodiment will be appended to configuration of the capillary electrophoresis analysis device 310 according to the fourth exemplary embodiment similar to that of the first exemplary embodiment, and specific description will be omitted thereof.

### Fourth Exemplary Embodiment

### Configuration

In the present exemplary embodiment, as illustrated in Fig. 10, the shapes of inflow paths 334, 364, outflow paths 336, 366, and liquid reservoirs 332, 362 differ to those of the first exemplary embodiment or the second exemplary embodiment.

In the present exemplary embodiment, the inflow paths 334, 364 are configured as tube-shaped liquid through paths extending in the vertical direction as illustrated in Fig. 10. Moreover, the inflow paths 334, 364 externally open the flow paths 330, 360 at the opposite side to the liquid reservoirs 332, 362, and the pressures at the open ends thereof are equal to the atmospheric pressure outside the flow paths 330, 360.

Moreover, in the present exemplary embodiment, the outflow paths 336, 366 have shapes similar to those of the outflow paths 236, 266 according to the third exemplary embodiment. Namely, in the present exemplary embodiment, the outflow paths 336, 366 extend in the vertical direction as illustrated in Fig. 10, and are branched in the horizontal direction. Moreover, in the capillary electrophoresis analysis device 310, flow path valves 340, 370 are provided to the opening paths 346, 376 on the opposite side to the outflow paths 336, 366. The opposite sides of the flow path valves 340, 370 to the flow paths 330, 360 (to the capillary electrophoresis analysis device 310 side) are open externally, and the pressures at the open ends of the flow paths 330, 360 are equal to the atmospheric pressure in an open state of the flow path valves 340, 370. In other words, the pressures inside the opening paths 346, 376 are equal to atmospheric pressure in an open state of the flow path valves 340, 370 of the opening paths 346, 376.

Note that the liquid reservoirs 332, 362 of the present exemplary embodiment extend in a horizontal direction from the downstream side of the inflow paths 334, 364 to the upstream side of the outflow paths 336, 366, and also extend upward at the upstream side and the downstream side, as illustrated in Fig. 10. In other words, the liquid reservoirs 332, 362 in the present exemplary embodiment are configured by bottom portions of the flow paths 330, 360 configured with substantially U-shaped profiles. Moreover, a capillary 324 connects the liquid reservoirs 332, 362 together.

Note that in the present exemplary embodiment, the migration solution RS or the sample solution SS is supplied from the supply units 44, 74 into the inflow paths 334, 364, and is thereby flowed to outside in sequence through the inflow paths 334, 364, the liquid reservoirs 332, 362, and the outflow paths 336, 366. In the present exemplary embodiment, when the migration solution RS or the sample solution SS has been supplied into the inflow paths 334, 364 from the supply units 44, 74, all the portions of the inflow paths 334, 364, the liquid reservoirs 332, 362, and the outflow paths 336, 366 are filled with the migration solution RS or the sample solution SS. Note that in the present exemplary embodiment, as long as the liquid surfaces of the migration solution RS and sample solution SS are positioned further upward in the vertical direction than the opening paths 346, 376, the liquid surfaces may be partway along the outflow paths 336, 366. In other words, the outflow paths 336, 366 are not necessarily completely filled with the migration solution RS or the sample solution SS.

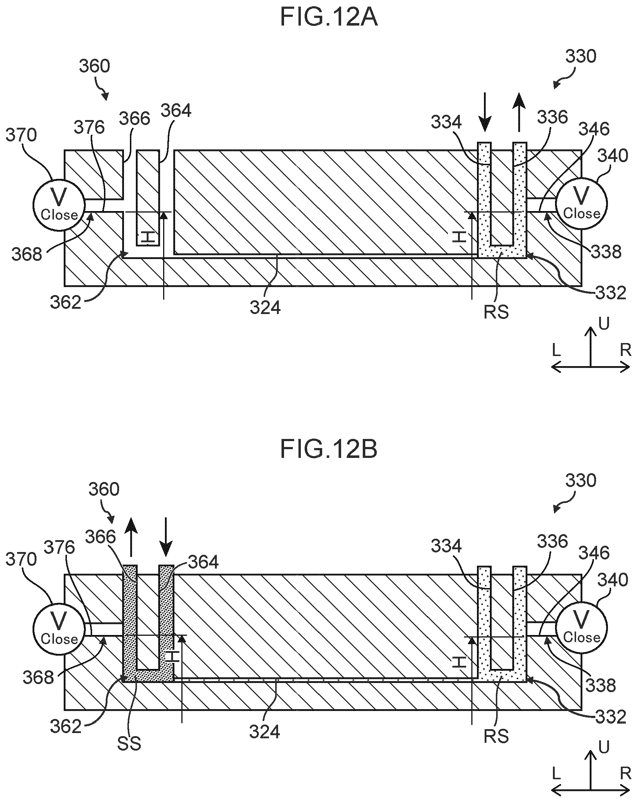

Moreover, with the opening paths 346, 376 in the present exemplary embodiment, flow of solution inside the opening paths 346, 376 is stopped in a closed state of the flow path valves 340, 370. More specifically, in a state in which the flow path valves 340, 370 have been closed, the insides of the opening paths 346, 376 are no longer open externally, and so the flow of solution inside the opening paths 346, 376 is stopped (see Fig. 12B described later).

Note that in the present exemplary embodiment, the positions H in the vertical direction of the first opening path 346 and the second opening path 376 are equal, as illustrated in Fig. 12B described later. Moreover, in the present exemplary embodiment, the first opening path 346 configures (acts as, or provides) a first liquid level adjustment section 338, and the second opening path 376 configures (acts as, or provides) a second liquid level adjustment section 368. Namely, in the present exemplary embodiment, the first opening path 346 is an example of a "first liquid level adjustment section" and the second opening path 376 is an example of a "second liquid level adjustment section". Moreover, other configuration is similar to that of the first exemplary embodiment.

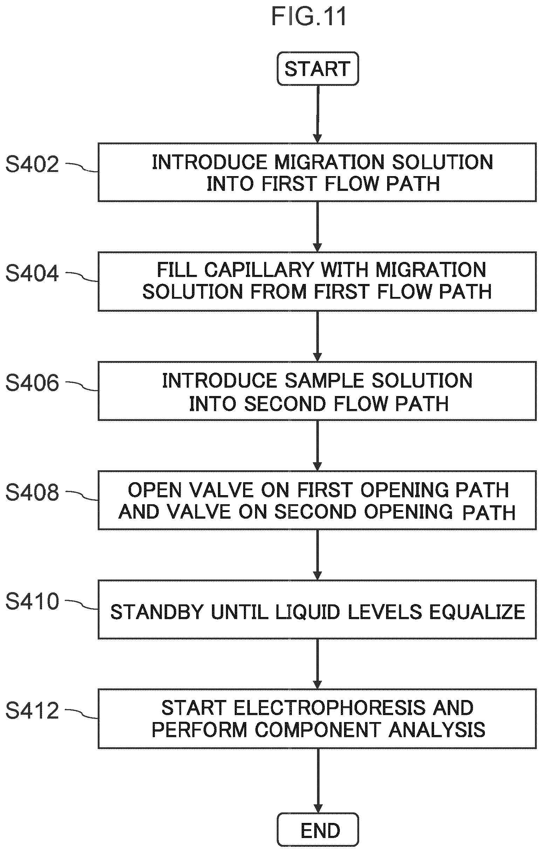

Description follows regarding processes of the electrophoresis method according to the present exemplary embodiment, with reference to Fig. 11 to Fig. 12D. Note that Fig. 12A to Fig. 12D illustrate the positional relationships in the vertical direction for each configuration of the flow paths 330, 360, the flow path valves 340, 370, and the capillary 324, and sometimes other configuration is omitted.

### Electrophoresis Method

The control unit 22 according to the present exemplary embodiment sequentially executes the processes illustrated in Fig. 11 by executing a non-illustrated program.

First at step S402, the control unit 22 drives the first supply unit 44, introduces the migration solution RS into a first flow path 330, and fills the first inflow path 334, the first liquid reservoir 332, and the first outflow path 336 with the migration solution RS, as illustrated in Fig. 12A.

Next, at step S404, the control unit 22 fills from the first flow path 330 to the capillary 324 with the migration solution RS. Note that in the present exemplary embodiment, the migration solution RS fills the capillary 324 under capillary action. In other words, the control unit 22 waits on standby until the migration solution RS standing in the first liquid reservoir 332 has filled the capillary 324.

Next at step S406, the control unit 22 drives the second supply unit 74, introduces the sample solution SS into the second flow path 360, and fills the second inflow path 364, the second liquid reservoir 362, and the second outflow paths 366 with the sample solution SS, as illustrated in Fig. 12B.

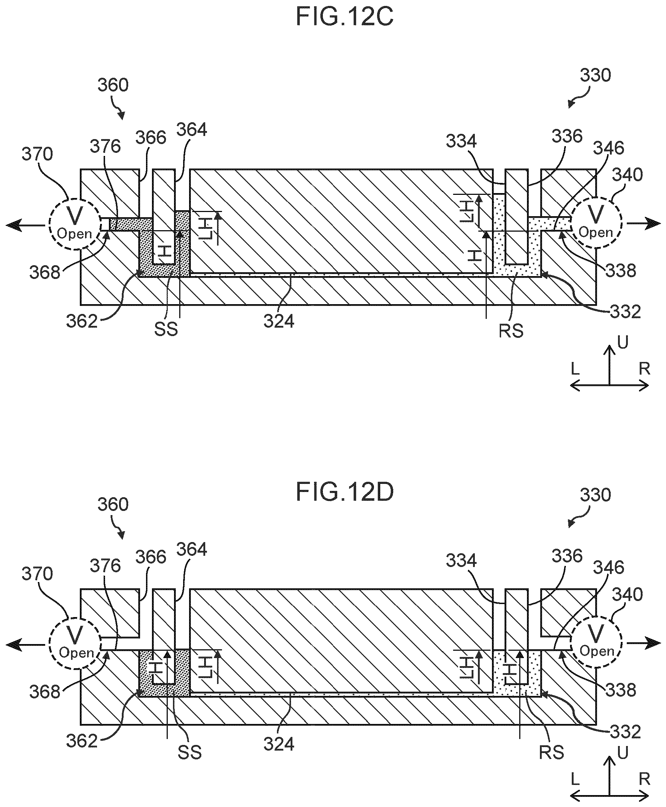

Next at step S408, the control unit 22 opens the flow path valves 340, 370 as well as stopping driving the second supply units 44, 74, as illustrated in Fig. 12C. The liquid levels LH of the migration solution RS and the sample solution SS fall, as illustrated in Fig. 12C.

Next, at step S410, the control unit 22 waits on standby until the liquid levels LH of the migration solution RS and the sample solution SS inside the flow paths 330, 360 equalize under gravity, as illustrated in Fig. 12D. More specifically, the control unit 22 waits on standby until the liquid levels LH of the migration solution RS and the sample solution SS standing in the liquid reservoirs 332, 362 are equal to the position H in the vertical direction of the opening paths 346, 376.

Next at step S412 the control unit 22 applies a voltage to the pair of electrodes 28 arranged in the first flow path 330 and the second flow path 360, and starts electrophoresis. Moreover, the control unit 22 measures the concentration and type of components contained in the sample solution SS by using the detector 26 to measure components of the fluid moving through the capillary 324 under electroosmotic flow.

In the present exemplary embodiment the liquid levels LH at the two ends of the capillary 324 are adjusted by the processes described above. Namely, in the present exemplary embodiment, step S402 is an example of a "process of causing a solution to flow from a first inflow path", step S406 is an example of a "process of causing the solution to flow from a second inflow path", and step S404 is an example of a "process of filling a capillary leading from the first liquid reservoir to the second liquid reservoir with the solution". Moreover, in the present exemplary embodiment, step S408 and step S410 are together an example of a "pressure equalization process that is a process of using the first liquid level adjustment section and the second liquid level adjustment section to equalize vertical direction positions of liquid surfaces of standing solutions in the first liquid reservoir and the second liquid reservoir", and step S412 is an example of a "process of performing electrophoresis with respect to components contained in the solution inside the capillary ".

The component analysis device and the electrophoresis method according to the present exemplary embodiment can obtain the following operation and advantageous effects.

### Operation and Advantageous Effects

In the electrophoresis unit 320 of the present exemplary embodiment, the opening paths 346, 376 branching from the outflow paths 336, 366 function as liquid level adjustment sections 338, 368 that open externally. The electrophoresis unit 320 according to the present exemplary embodiment thereby enables the solution flowing in the flow paths 330, 360 to flow from the outflow paths 336, 366 or the opening paths 346, 376.

Moreover, the electrophoresis unit 320 of the present exemplary embodiment includes the flow path valves 340, 370 on the opening paths 346, 376 to stop the flow of solution flowing from above the liquid reservoirs 332, 362. The electrophoresis unit 320 according to the present exemplary embodiment is thereby able to prevent solution flowing from the opening paths 346, 376 unintentionally when solution is flowing from the inflow paths 334, 364 to the outflow paths 336, 366.

Moreover, in the electrophoresis method of the present exemplary embodiment, in the pressure equalization process, solution is flowed from the opening paths 346, 376 that branch from the outflow paths 336, 366 for flowing solution from the liquid reservoirs 332, 362, and that function as the liquid level adjustment sections 338, 368 that open externally. The electrophoresis method according to the present exemplary embodiment is thereby able to flow solution flowing in the flow paths 330, 360 from the outflow paths 336, 366 or the opening paths 346, 376.

Moreover, in the electrophoresis method of the present exemplary embodiment, valves provided to the opening paths 346, 376 to stop flow of solution flowing from above the liquid reservoirs 332, 362 are employed in the pressure equalization process, thereby stopping solution inside the opening paths 346, 376. The electrophoresis method according to the present exemplary embodiment is thereby able to prevent solution from flowing from the opening paths 346, 376 unintentional when solution flows from the inflow paths 334, 364 to the outflow paths 336, 366.

Note that as described above, the flow path valves 340, 370 are provided to the capillary electrophoresis analysis device 310, however there is no limitation thereto, and the electrophoresis unit 320 may include the flow path valves 340, 370. Namely, the flow path valves 340, 370 may be provided to the opening paths 346, 376.

Note that in the present exemplary embodiment too, configuration is similar to that of the first exemplary embodiment to the third exemplary embodiment, and so similar operation and advantageous effects can be obtained to those of the first exemplary embodiment to the third exemplary embodiment.

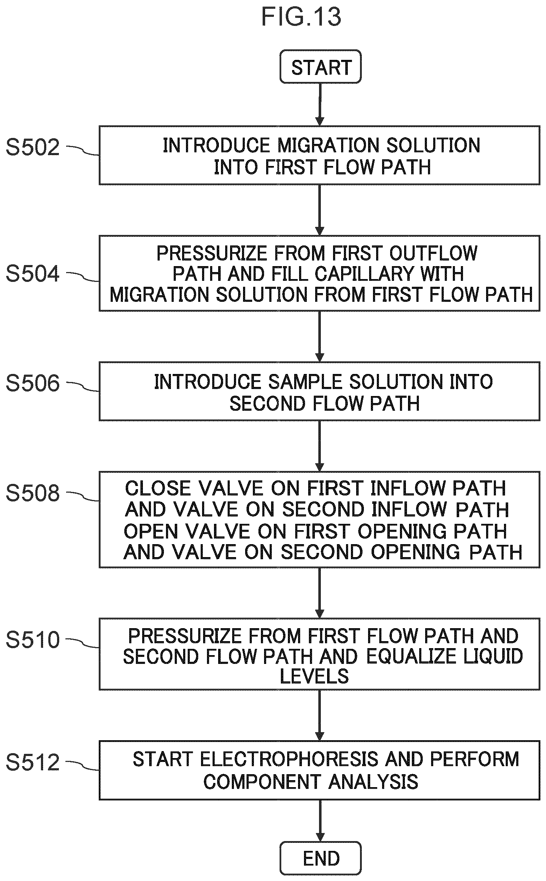

Next, description follows regarding a capillary electrophoresis analysis device 410 according to a fifth exemplary embodiment of the present invention, with reference to Fig. 13 to Fig. 14D. Note that the same reference numerals to those of the first exemplary embodiment will be appended to configuration of the capillary electrophoresis analysis device 410 according to the fifth exemplary embodiment similar to that of the first exemplary embodiment, and specific description will be omitted thereof.

### Fifth Exemplary Embodiment

### Configuration

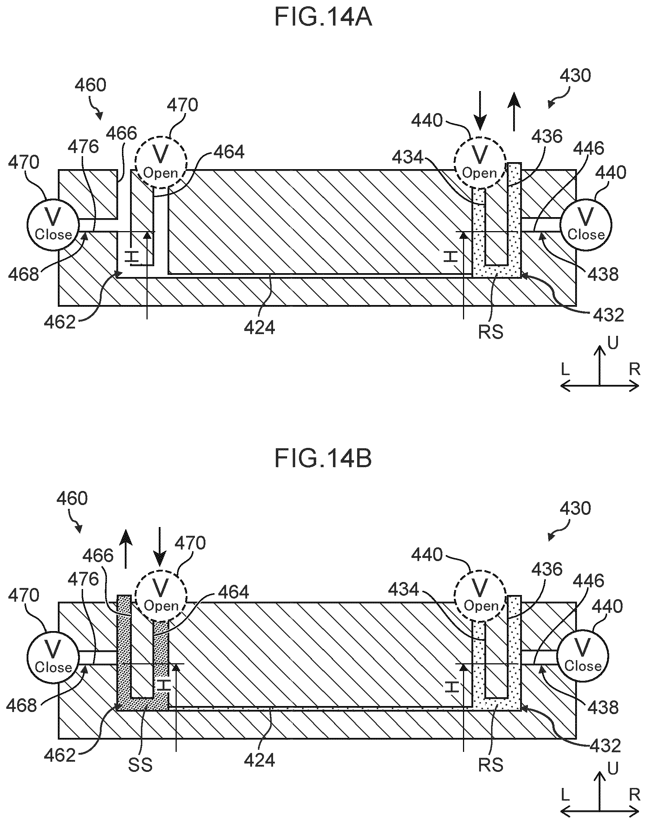

In the present exemplary embodiment, inflow paths 434, 464 are, similarly to in the fourth exemplary embodiment, tube-shaped liquid through paths extending in the vertical direction as illustrated in Fig. 14A to Fig. 14D. Flow path valves 440, 470 are provided at the upstream side of inflow paths 434, 464 in the capillary electrophoresis analysis device 410. The migration solution RS or the sample solution SS supplied from the supply units 44, 74 flows to the inflow paths 434, 464 through the flow path valves 440, 470. In other words, in the present exemplary embodiment, the flow path valves 440, 470 are respectively provided at the upstream side of the inflow paths 434, 464, and also at the open ends of the opening paths 446, 476. Moreover, the capillary 424 connects the liquid reservoirs 432, 462 together.

Note that in the present exemplary embodiment, the outflow paths 436, 466 are connected to external pressure pumps through non-illustrated switching valves such as a three-way valve, enabling compressed air to be supplied from the downstream side of the outflow paths 436, 466 (from the top in Fig. 14A to Fig. 14D). In other words, the flow paths 430, 460 in the present exemplary embodiment are pressurized by supplying compressed air in from the downstream side of the outflow paths 436, 466.

Moreover, the present exemplary embodiment assumes that the migration solution RS and the sample solution SS have viscosities higher than the migration solution RS and the sample solution SS according to the fourth exemplary embodiment. This means that the present exemplary embodiment is one in which the liquid levels LH do not easily fall merely by opening the flow path valves 440, 470 of the opening paths 446, 476 as at step S408 in the fourth exemplary embodiment.

Note that other configuration is similar to that of the fourth exemplary embodiment. Namely, in the present exemplary embodiment, the first opening path 446 is an example of a "first liquid level adjustment section" and the second opening path 476 is an example of a "second liquid level adjustment section".

Next, description follows regarding processes of the electrophoresis method according to the present exemplary embodiment, with reference to Fig. 13 to Fig. 14D. Note that in Fig. 14A to Fig. 14D, the positional relationships in the vertical direction for each configuration of the flow paths 430, 460, the flow path valves 440, 470, and the capillary 424, and sometimes other configuration is omitted.

### Electrophoresis Method

The control unit 22 according to the present exemplary embodiment sequentially executes the processes illustrated in Fig. 13 by executing a non-illustrated program.

First at step S502, the control unit 22 drives the first supply unit 44, introduces the migration solution RS into the first flow path 430, and fills the first inflow path 434, the first liquid reservoir 432, and the first outflow path 436 with the migration solution RS, as illustrated in Fig. 14A. Note that in the present exemplary embodiment, as long as the liquid surface of the migration solution RS is positioned further upward in the vertical direction than the first opening path 446, the liquid surface may be partway along the first outflow path 436. In other words, the first outflow path 436 is not necessarily completely filled with the migration solution RS.

Next, at step S504, the control unit 22 fills the capillary 424 with the migration solution RS from the first flow path 430. Note that in the present exemplary embodiment the migration solution RS fills the capillary 424 by pressurization of the first outflow path 436 by supplying compressed air from the downstream side.

Next, at step S506, the control unit 22 drives the second supply unit 74, introduces the sample solution SS into the second flow path 460, and fills the second inflow path 464, the second liquid reservoir 462, and the second outflow paths 466 with the sample solution SS, as illustrated in Fig. 14B. Note that in the present exemplary embodiment, as long as the liquid surface of the sample solution SS is positioned further upward in the vertical direction than the second opening path 476, the liquid surface may be partway along the second outflow path 466. In other words, the second outflow path 466 is not necessarily completely filled with the sample solution SS.

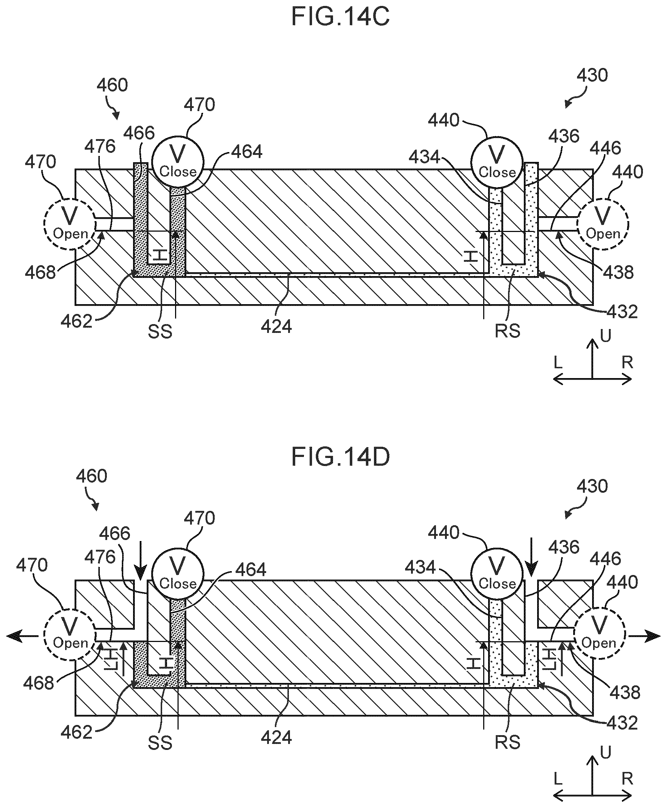

Next, at step S508, the control unit 22 opens the flow path valves 440, 470 on the opening paths 446, 476 as well as stopping driving of the supply units 44, 74, as illustrated in Fig. 14C. At step S508, the control unit 22 closes the flow path valves 440, 470 of the inflow paths 434, 464.

Next at step S510, the control unit 22 supplies compressed air from the downstream side of the outflow paths 436, 466 and pressurizes the outflow paths 436, 466, as illustrated in Fig. 14D. The liquid levels LH of the migration solution RS and the sample solution SS accordingly fall due to the migration solution RS and the sample solution SS being discharged from the opening paths 446, 476, as illustrated in Fig. 14D.

Next, at step S512, the control unit 22 applies a voltage to the pair of electrodes 28 arranged in the second flow path 460 and the first flow path 430, and starts electrophoresis. Moreover, the control unit 22 measures the concentration and type of components contained in the sample solution SS by using the detector 26 to measure components of the fluid moving through the capillary 424 under electroosmotic flow.

In the present exemplary embodiment, the liquid levels LH are adjusted at the two ends of the capillary 424 by the above processes. Namely, in the present exemplary embodiment, step S502 is an example of a "process of causing a solution to flow from a first inflow path", step S506 is an example of a "process of causing the solution to flow from a second inflow path", and step S504 is an example of a "process of filling a capillary leading from the first liquid reservoir to the second liquid reservoir with the solution". Moreover, in the present exemplary embodiment, step S508 and step S510 are together an example of a "pressure equalization process that is a process of using the first liquid level adjustment section and the second liquid level adjustment section to equalize vertical direction positions of liquid surfaces of standing solutions in the first liquid reservoir and the second liquid reservoir", and step S512 is an example of a "process of performing electrophoresis with respect to components contained in the solution inside the capillary ".

The component analysis device and the electrophoresis method according to the present exemplary embodiment can obtain the following operation and advantageous effects.

### Operation and Advantageous Effects

The electrophoresis unit 420 of the present exemplary embodiment includes the inflow paths 434, 464 with the flow path valves 440, 470 for stopping a flow of solution flowing into the liquid reservoirs 432, 462 from above.

In the electrophoresis unit 420 according to the present exemplary embodiment, the inflow paths 434, 464 include the flow path valves 440, 470, and due to the flow path valves 440, 470 stopping the solution of the inflow paths 434, 464, there is no longer an effect on the fluid pressure inside the liquid reservoirs 432, 462. In other words, the pressure acting on the solutions inside the liquid reservoirs 432, 462 depends on the external pressure and the liquid height inside the outflow paths 436, 466, the pressure acting on the solution inside the first liquid reservoir 432 becomes the same as the pressure acting on the solution inside the second liquid reservoir 462. The electrophoresis unit 420 according to the present exemplary embodiment is thereby able to align the fluid pressures acting at the two ends of the capillary 424 without discharging solution inside the flow paths 430, 460 in the liquid reservoirs 432, 462 from the inflow paths 434, 464.

Moreover, the electrophoresis method of the present exemplary embodiment, in the pressure equalization process, the flow path valves 440, 470 provided on the inflow paths 434, 464 for stopping the flow of solution flowing into the liquid reservoirs 432, 462 from above are used to stop the solution inside the inflow paths 434, 464.

In the electrophoresis method according to the present exemplary embodiment, due to using the flow path valves 440, 470 to stop the solution of the inflow paths 434, 464, there is no longer an effect therefrom on the fluid pressure inside the liquid reservoirs 432, 462. In other words, due to the pressure acting on the solutions inside the liquid reservoirs 432, 462 depending on the external pressure and the liquid height inside the outflow paths 436, 466, the pressure acting on the solution inside the first liquid reservoir 432 becomes the same as the pressure acting on the solution inside the second liquid reservoir 462. The electrophoresis method according to the present exemplary embodiment is thereby able to align the fluid pressures acting at the two ends of the capillary 424 without discharging solution inside the flow paths 430, 460 from the inflow paths 434, 464 to the liquid reservoirs 432, 462.

Note that although in the above description the flow path valves 440, 470 are provided to the capillary electrophoresis analysis device 410, there is no limitation thereto, and the electrophoresis unit 420 may include the flow path valves 440, 470. Namely, the flow path valves 440, 470 may be provided to the inflow paths 434, 464 and to the opening paths 446, 476.

Moreover although, as described above, at step S504, the migration solution RS is pressurized by supplying compressed air from the downstream side of the first outflow path 436, instead of this, the capillary 424 may be filled by evacuating the second flow path 460. Note that in this case a pressure reducing pump may be connected to the outside of the second outflow path 466 or the second opening path 476.

Moreover, although at step S510 in the above description, the outflow paths 436, 466 are pressurized by suppling compressed air from the downstream side of the outflow paths 436, 466, there is no limitation thereto, and evacuating may be performed at the outside of the opening paths 446, 476. In other words, instead of pressurizing the outflow paths 436, 466, the migration solution RS or the sample solution SS may be discharged by reducing the pressure of the opening paths 446, 476, in the state illustrated in Fig. 14D. Note that in this case a pressure reducing pump may be connected to the outside of the opening paths 446, 476.

Note that in the present exemplary embodiment too, configuration is similar to that of the first exemplary embodiment to the fourth exemplary embodiment, and so similar operation and advantageous effects can be obtained to those of the first exemplary embodiment to the fourth exemplary embodiment.

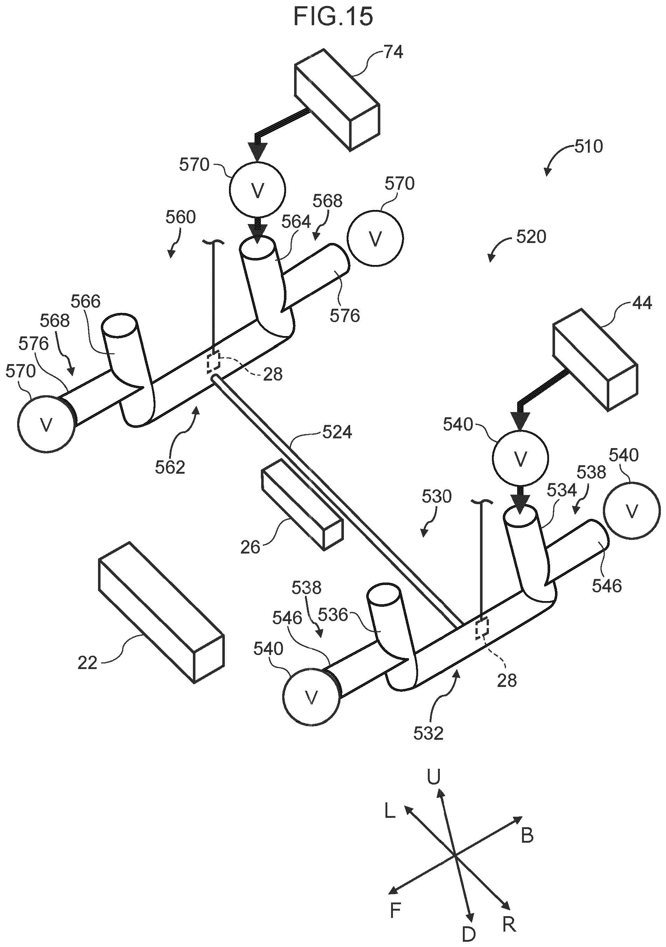

Next, description follows regarding a capillary electrophoresis analysis device 510 according to a sixth exemplary embodiment of the present invention, with reference to Fig. 15 to Fig. 17D. Note that the same reference numerals to those of the first exemplary embodiment will be appended to configuration of the capillary electrophoresis analysis device 510 according to the sixth exemplary embodiment similar to that of the first exemplary embodiment, and specific description will be omitted thereof.

### Sixth Exemplary Embodiment

### Configuration

In the present exemplary embodiment, inflow paths 534, 564 are, similarly to in the fifth exemplary embodiment, tube-shaped liquid through paths extending in the vertical direction, as illustrated in Fig. 15. Moreover, at the upstream side of the inflow paths 534, 564 of the capillary electrophoresis analysis device 510, flow path valves 540, 570 are provided at the open ends at the upstream side of the flow paths 530, 560. The migration solution RS or the sample solution SS supplied from the supply units 44, 74 is flowed into the inflow paths 534, 564 through the flow path valves 540, 570. A capillary 524 connects liquid reservoirs 532, 562 together.

Moreover, in the present exemplary embodiment, the inflow paths 534, 564 extending in the vertical direction and are branched in the horizontal direction, as illustrated in Fig. 15. The portions branched from the inflow paths 534, 564 and extending in the horizontal direction configure opening paths 546, 576. Namely, the electrophoresis unit 520 according to the present exemplary embodiment includes two each of first opening paths 546 and second opening paths 576.

Note that each of the first opening paths 546 and the second opening paths 576 have positions H in the vertical direction that are the same. Namely, the two first opening paths 546 are each an example of a "first opening path" in the present exemplary embodiment, and the two second opening paths 576 are each an example of a "second opening path" in the present exemplary embodiment. Moreover, the opening paths 546, 576 in the present exemplary embodiment each have a respective flow path valve 540, 570 on the opposite side thereof to the inflow paths 534, 564, and externally open the flow paths 530, 560, with the pressure at the open ends being equal to the atmospheric pressure outside the flow paths 530, 560. In other words, the pressure inside the opening paths 546, 576 is equal to atmospheric pressure in an open state of the flow path valves 540, 570 of the opening paths 546, 576.

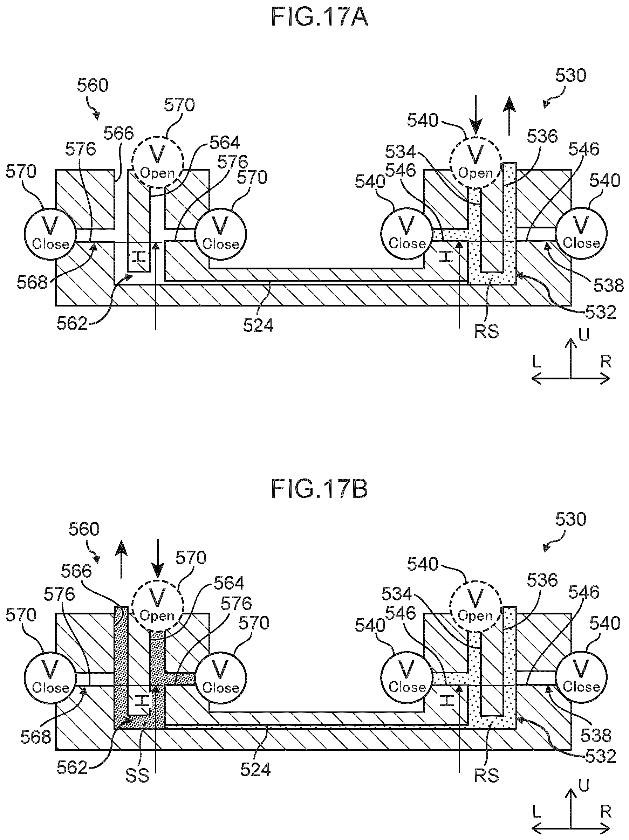

Note that in the present exemplary embodiment, the inflow paths 534, 564 are externally connected to pressure pumps through switching valves such as a three-way valve, enabling compressed air to be supplied from the upstream side of the inflow paths 534, 564 (from the top in Fig. 17A to Fig. 17D). In other words, the flow paths 530, 560 in the present exemplary embodiment are pressurized by suppling compressed air from the upstream side of the inflow paths 534, 564.

Note that other configuration is similar to that of the fifth exemplary embodiment. Namely, in the present exemplary embodiment, the first opening path 546 is an example of a "first liquid level adjustment section" and the second opening path 576 is an example of a "second liquid level adjustment section". Moreover, in the present exemplary embodiment, the flow path valves 540, 570 are provided to each of the inflow paths 534, 564 and the opening paths 546, 576.

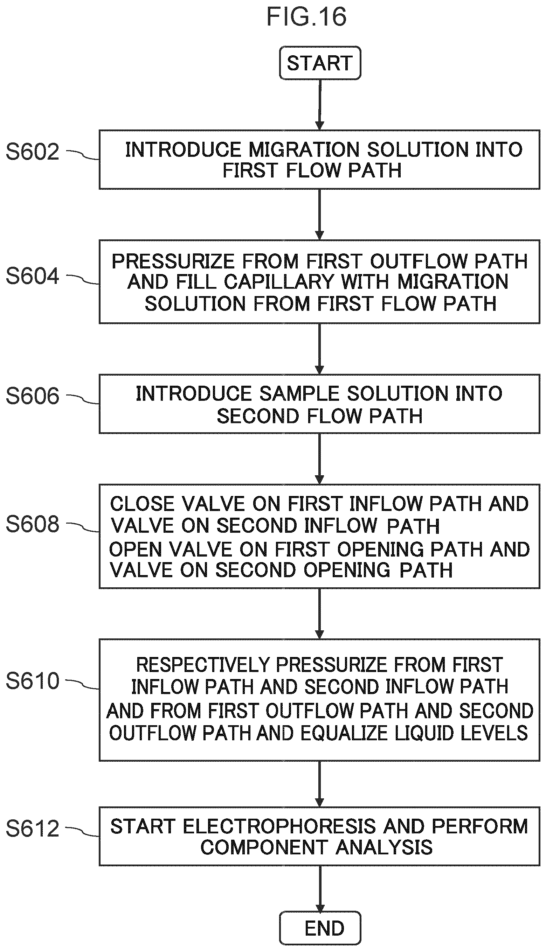

Description follows regarding processes of the electrophoresis method according to the present exemplary embodiment, with reference to Fig. 16 to Fig. 17D. Note that Fig. 17A to Fig. 17D illustrate positional relationships in the vertical direction for each configuration of the flow paths 530, 560, the flow path valves 540, 570, and the capillary 524, and sometimes other configuration is omitted.

### Electrophoresis Method

The control unit 22 according to the present exemplary embodiment sequentially executes the processes illustrated in Fig. 16 by executing a non-illustrated program.

First at step S602, the control unit 22 drives the first supply unit 44, introduces the migration solution RS into the first flow path 530, and fills the first inflow path 534, the first liquid reservoir 532, and the first outflow path 536 with the migration solution RS, as illustrated in Fig. 17A.

Next, at step S604, the control unit 22 fills the capillary 524 with the migration solution RS from the first flow path 530. Note that in the present exemplary embodiment, the migration solution RS fills the capillary 524 by pressurizing by suppling compressed air from the downstream side of the first outflow path 536.

Next, at step S606, the control unit 22 drives the second supply unit 74, introduces the sample solution SS into the second flow path 560, and fills the second inflow path 564, the second liquid reservoir 562, and the second outflow paths 566 with the sample solution SS, as illustrated in Fig. 17B.

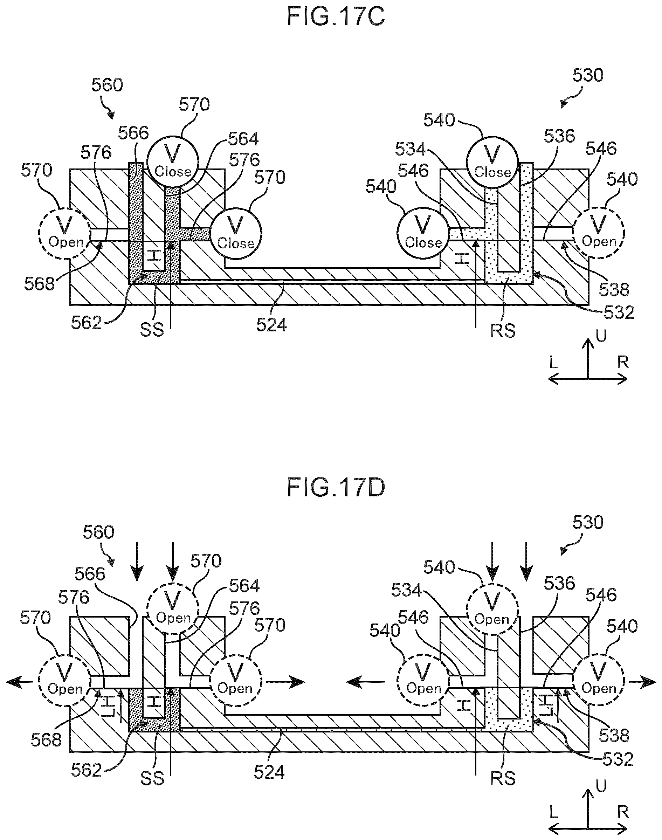

Next, at step S608, the control unit 22 opens the flow path valves 540, 570 on the opening paths 546, 576 at the outflow path 536, 566 side as well as stopping driving of the supply units 44, 74, as illustrated in Fig. 17C. At step S608, the control unit 22 closes the flow path valves 540, 570 of the inflow paths 534, 564.

Next, at step S610, the control unit 22 supplies compressed air from the downstream side of the outflow paths 536, 566 and pressurizes the outflow paths 536, 566, as illustrated in Fig. 17D. As illustrated in Fig. 17D, the liquid levels LH of the migration solution RS and the sample solution SS accordingly fall due to the migration solution RS and the sample solution SS being discharged from the opening paths 546, 576 of the outflow paths 536, 566.

Note that furthermore at step S610, the control unit 22 according to the present exemplary embodiment opens the flow path valves 540, 570 of the inflow paths 534, 564, and opens the flow path valves 540, 570 of the opening paths 546, 576 on the inflow paths 534, 564 side.

Moreover, also at step S610, the control unit 22 according to the present exemplary embodiment supplies compressed air from the upstream side of the inflow paths 534, 564 and pressurizes the inflow paths 534, 564, as illustrated in Fig. 17D. As illustrated in Fig. 17D, the liquid levels LH of the migration solution RS and the sample solution SS accordingly fall due to the migration solution RS and the sample solution SS being discharged from the opening paths 546, 576 of the inflow paths 534, 564.

Next, at step S612, the control unit 22 applies a voltage to the pair of electrodes 28 arranged in the first flow path 530 and the second flow path 560, and starts electrophoresis. Moreover, the control unit 22 measures the concentration and type of components contained in the sample solution SS by using the detector 26 to measure components of the fluid moving through the capillary 524 under electroosmotic flow.

In the present exemplary embodiment, the liquid levels LH at the two ends of the capillary 524 are adjusted by the processes described above. Namely, in the present exemplary embodiment, step S602 is an example of a "process of causing a solution to flow from a first inflow path", step S606 is an example of a "process of causing the solution to flow from a second inflow path", and step S604 is an example of a "process of filling a capillary leading from the first liquid reservoir to the second liquid reservoir with the solution". Moreover, in the present exemplary embodiment, step S608 and step S610 are together an example of a "pressure equalization process that is a process of using the first liquid level adjustment section and the second liquid level adjustment section to equalize vertical direction positions of liquid surfaces of standing solutions in the first liquid reservoir and the second liquid reservoir", and step S612 is an example of a "process of performing electrophoresis with respect to components contained in the solution inside the capillary ".

The component analysis device and the electrophoresis method according to the present exemplary embodiment enable the following operation and advantageous effects to be obtained.

### Operation and Advantageous Effects

The electrophoresis unit 520 of the present exemplary embodiment includes the externally open opening paths 546, 576 on each of the inflow paths 534, 564 and the outflow paths 536, 566. The electrophoresis unit 520 according to the present exemplary embodiment is thereby able to align the liquid levels LH of the migration solution RS or the sample solution SS faster than cases in which the opening paths 546, 576 are formed only on the outflow paths 536, 566 or on the inflow paths 534, 564.

Moreover, the electrophoresis unit 520 according to the present exemplary embodiment, in the pressure equalization process, readily discharges air from any of the opening paths 546, 576 even in cases in which air has been incorporated into the migration solution RS or the sample solution SS for flowing into the inflow paths 534, 564. The electrophoresis unit 520 of the present exemplary embodiment is thereby able to align the liquid levels LH irrespective of sealing performance at the upstream side of the inflow paths 534, 564.

Moreover, the electrophoresis method according to the present exemplary embodiment respectively includes the inflow paths 534, 564 and the outflow path 536, 566, and discharges the migration solution RS or the sample solution SS from the opening paths 546, 576 that open externally. The electrophoresis method according to the present exemplary embodiment thereby enables the liquid levels LH of the migration solution RS or the sample solution SS to be aligned faster than cases in which the migration solution RS or the sample solution SS is discharged from opening paths 546, 576 only provided to the outflow paths 536, 566 or to the inflow paths 534, 564.

Moreover, in the electrophoresis method according to the present exemplary embodiment, in the pressure equalization process, the solutions are flowed from the inflow paths 534, 564. This means that air is readily discharged from any of the opening paths 546, 576 even in cases in which air has been incorporated into the migration solution RS or the sample solution SS for flowing into the inflow paths 534, 564. The electrophoresis method of the present exemplary embodiment is thereby capable of aligning the liquid levels LH irrespective of the sealing performance at the upstream side of the inflow paths 534, 564.

Note that although in the above description the flow path valves 540, 570 are provided to the capillary electrophoresis analysis device 510, there is no limitation thereto, and the electrophoresis unit 520 may include the flow path valves 540, 570. Namely, the flow path valves 540, 570 may be respectively provided to the inflow paths 534, 564 and to plural opening paths 546, 576.

Note that in the present exemplary embodiment too, configuration is similar to that of the first exemplary embodiment to the fifth exemplary embodiment, and so similar operation and advantageous effects can be obtained to those of the first exemplary embodiment to the fifth exemplary embodiment.

### Other Exemplary Embodiments

Note that although in the above description the capillary 24 connects the side face sides of the first liquid reservoir 32 and the second liquid reservoir 62 together, the technology according to the present invention is not limited thereto. For example, the capillary 24 may connect the first liquid reservoir 32 and the second liquid reservoir 62 together in a curve as long as the detector 26 is able to measure components in the capillary 24. Namely, the shape of the capillary 24 is not limited to the shapes in the above description.

Moreover, although the above description is an embodiment in which the bottom face of the second liquid reservoir 62 has the lowest position H in the vertical direction on the flow paths 30, 60, the technology according to the present invention is not limited thereto. As long as the positions H in the vertical direction of the first liquid level adjustment sections 38 and the second liquid level adjustment section 68 are equal to each other, this will result in the liquid levels LH of the first liquid reservoir 32 and the second liquid reservoir 62 being equal to each other, and so, for example, the inflow paths 34, 64 and the outflow paths 36, 66 may be connected to the bottom face of the liquid reservoir 62. In other words, the fluid flowing to the liquid reservoir 62 and the fluid flowing from the liquid reservoir 62 may pass through positions H in the vertical direction that are positions lower than the bottom face of the liquid reservoir 62.

Moreover, although in the above description, the shape of the first flow path 30 and the second flow path 60 were the same in all of the exemplary embodiments, the technology according to the present invention is not limited thereto. Namely, as long as a configuration is adopted in which the positions H in the vertical direction of the first liquid level adjustment sections 38 and the second liquid level adjustment section 68 are the same as each other, any of the configurations of the exemplary embodiments described above may be employed for the shape of the first flow path 30 and the second flow path 60. In other words, shapes from different respective exemplary embodiments may be adopted for the shapes of the first flow path 30 and the second flow path 60.

Moreover, although in the above description the electrophoresis unit 20 is integrally formed with the first flow path 30, the second flow path 60, and the capillary 24 in all of the exemplary embodiments, the technology according to the present invention is not limited thereto. For example, the electrophoresis unit 20 may be divided in the vertical direction or the horizontal direction, and formed by combining plural components.

Moreover, although in the above description, for the second exemplary embodiment the migration solution RS and the sample solution SS are flowed respectively from the inflow paths 134, 164 to the flow paths 130, 160, the technology according to the present invention is not limited thereto. Namely, the second exemplary embodiment may be configured as an embodiment in which the migration solution RS and the sample solution SS are respectively flowed into the flow paths 130, 160 from the outflow paths 136, 166. Moreover, these modified examples may be similarly adopted in the third exemplary embodiment to the sixth exemplary embodiment.

These modified examples are also able to obtain similar operation and advantageous effects to those described above.

Although exemplary embodiments of the present invention have been described with reference to the appended drawings, it would be obvious to a person of ordinary skill in the art of the present invention that various modified examples or application examples are conceivable within the scope of the technical concept as recited in the range of the patent claims, and obviously such modified examples and application examples should be understood as belonging to the technical scope of the present invention.

## Claims

1. An electrophoresis unit (20; 120; 220; 320; 420; 520), comprising:
a first flow path (30; 130; 230; 330; 430; 530) including a first liquid reservoir (32; 132; 232; 332; 432; 532), a first inflow path (34; 134; 234; 334; 434; 534) at which a solution (migration solution RS, sample solution SS) flows into the first liquid reservoir (32; 132; 232; 332; 432; 532), a first outflow path (36; 136; 236; 336; 436; 536) at which the solution (RS, SS) flows out from the first liquid reservoir (32; 132; 232; 332; 432; 532), and a first liquid level adjustment section (38; 138; 238; 338; 438; 538) that is open to an exterior;
a second flow path (60; 160; 260; 360; 460; 560) including a second liquid reservoir (62; 162; 262; 362; 462; 562), a second inflow path (64; 164; 264; 364; 464; 564) at which the solution (RS, SS) flows into the second liquid reservoir (62; 162; 262; 362; 462; 562), a second outflow path (66; 166; 266; 366; 466; 566) at which the solution (RS, SS) flows out from the second liquid reservoir (62; 162; 262; 362; 462; 562), and a second liquid level adjustment section (68; 168; 268; 368; 468; 568) that is open to the exterior;
a capillary (24; 124; 224; 324; 424; 524) that leads from the first liquid reservoir (32; 132; 232; 332; 432; 532) to the second liquid reservoir (62; 162; 262; 362; 462; 562); and
an electrode (28) arranged in each of an interior of the first flow path (30; 130; 230; 330; 430; 530) and an interior of the second flow path (60; 160; 260; 360; 460; 560),
wherein vertical direction positions (H) of the first liquid level adjustment section (38; 138; 238; 338; 438; 538) and the second liquid level adjustment section (68; 168; 268; 368; 468; 568) are equal to each other.

2. The electrophoresis unit (20) of claim 1, wherein the first outflow path (36) configures the first liquid level adjustment section (38) extending laterally within a vertical direction range of the first liquid reservoir (32).

3. The electrophoresis unit (120) of claim 2, wherein a valve (140) for stopping a flow of the solution (RS, SS) into the first liquid reservoir (132) from above is provided at the first inflow path (134).

4. The electrophoresis unit (220) of claim 1, wherein the first inflow path (234) is configured to supply the solution (RS, SS) into the first liquid reservoir (232) from above and configures the first liquid level adjustment section (238) that is open to the exterior.

5. The electrophoresis unit (320; 420; 520) of claim 1, wherein a first opening path (336; 436; 536) that branches from the first outflow path (336; 436; 536) configures the first liquid level adjustment section (338; 438; 538) that is open to the exterior.

6. The electrophoresis unit (320; 420; 520) of claim 5, wherein a valve (340; 440; 540) for stopping a flow of the solution (RS, SS) out from above the first liquid reservoir (332; 432; 532) is provided at the first opening path (336; 436; 536).

7. The electrophoresis unit (420; 520) of claim 6, wherein a valve (440; 540) for stopping a flow of the solution (RS, SS) into the first liquid reservoir (432; 532) from above is provided at the first inflow path (434; 534).

8. A component analysis device, comprising:
the electrophoresis unit (20; 120; 220; 320; 420; 520) of any one of claim 1 to claim 7;
a supply unit that is configured to supply a sample solution (SS) into the electrophoresis unit (20; 120; 220; 320; 420; 520); and
a control unit (22) that is configured to control the supply unit.

9. The component analysis device of claim 8, further comprising a detector (26) that detects a component of a solution (RS, SS) flowing inside the capillary (24; 124; 224; 324; 424; 524).

10. An electrophoresis method, comprising:
a process of causing a solution (migration solution RS, sample solution SS) to flow from a first inflow path (34; 134; 234; 334; 434; 534) into a first liquid reservoir (32; 132; 232; 332; 432; 532) of a first flow path (30; 130; 230; 330; 430; 530) including a first liquid level adjustment section (38; 138; 238; 338; 438; 538) that is open to an exterior and that equalizes a pressure of the first liquid reservoir (32; 132; 232; 332; 432; 532) with external pressure;
a process of causing the solution (RS, SS) to flow from a second inflow path (64; 164; 264; 364; 464; 564) into a second liquid reservoir (62; 162; 262; 362; 462; 562) of a second flow path (60; 160; 260; 360; 460; 560) including a second liquid level adjustment section (68; 168; 268; 368; 468; 568) that is open to the exterior, that equalizes a pressure of the second liquid reservoir (62; 162; 262; 362; 462; 562) with external pressure and that is disposed at a vertical direction position that is equal to that of the first liquid level adjustment section;
a process of filling a capillary (24; 124; 224; 324; 424; 524) leading from the first liquid reservoir (32; 132; 232; 332; 432; 532) to the second liquid reservoir (62; 162; 262; 362; 462; 562) with the solution (RS, SS);
a pressure equalization process (S110; S206, S210; S308, S310; S408, S410; S508, S510; S608, S610) that is a process of using the first liquid level adjustment section (38; 138; 238; 338; 438; 538) and the second liquid level adjustment section (68; 168; 268; 368; 468; 568) to equalize vertical direction positions (H) of liquid surfaces of standing solution (RS, SS) s in the first liquid reservoir (32; 132; 232; 332; 432; 532) and the second liquid reservoir (62; 162; 262; 362; 462; 562); and
a process of performing electrophoresis with respect to components contained in the solution (RS, SS) inside the capillary (24; 124; 224; 324; 424; 524) with electrodes (28) arranged respectively inside the first flow path (30; 130; 230; 330; 430; 530) and inside the second flow path (60; 160; 260; 360; 460; 560).

11. The electrophoresis method of claim 10, wherein the pressure equalization process (S110) includes causing the solution (RS, SS) to flow out via a first outflow path (36) configuring the first liquid level adjustment section (38) extending laterally in a vertical direction range of the first liquid reservoir (32), and adjusting the vertical direction position of the liquid surface of the standing solution (RS, SS) in the first liquid reservoir (32).

12. The electrophoresis method of claim 11, wherein the pressure equalization process (S206, S210) includes using a valve (140), provided at the first inflow path (134) for stopping a flow of the solution (RS, SS) into the first liquid reservoir (132) from above, to stop the flow of solution (RS, SS) in the first inflow path (134).

13. The electrophoresis method of claim 10, wherein the pressure equalization process (S308, S310) includes causing the solution (RS, SS) to flow into the first liquid reservoir (232) from above and causing the solution (RS, SS) to flow out via the first inflow path (234) configuring the first liquid level adjustment section (238) that is open to the exterior.

14. The electrophoresis method of claim 10, wherein the pressure equalization process (S408, S410; S508, S510; S608, S610) includes causing the solution (RS, SS) to flow out from a first opening path (336; 436; 536) that branches from a first outflow path (336; 436; 536) at which the solution (RS, SS) flows out from the first liquid reservoir (332; 432; 532) and that configures the first liquid level adjustment section (338; 438; 538) that is open to the exterior.

15. The electrophoresis method of claim 14, wherein the pressure equalization process (S408, S410; S508, S510; S608, S610) includes using a valve (340; 440; 540), provided at the first opening path (336; 436; 536) for stopping a flow of the solution (RS, SS) out from above the first liquid reservoir (332; 432; 532), to stop the solution (RS, SS) inside the first opening path.

16. The electrophoresis method of claim 15, wherein the pressure equalization process (S508, S510; S608, S610) includes using a valve (440; 540), provided at the first inflow path (434; 534) for stopping a flow of the solution (RS, SS) into the first liquid reservoir (432; 532) from above, to stop the solution (RS, SS) inside the first inflow path (434; 534).

## Patentansprüche

1. Elektrophoreseeinheit (20; 120; 220; 320; 420; 520), umfassend:
einen ersten Strömungsweg (30; 130; 230; 330; 430; 530), der ein erstes Flüssigkeitsreservoir (32; 132; 232; 332; 432; 532), einen ersten Zuflussweg (34; 134; 234; 334; 434; 534), an dem eine Lösung (Migrationslösung RS, Probenlösung SS) in das erste Flüssigkeitsreservoir (32; 132; 232; 332; 432; 532) fließt, einen ersten Abflussweg (36; 136; 236; 336; 436; 536), an dem die Lösung (RS, SS) aus dem ersten Flüssigkeitsreservoir (32; 132; 232; 332; 432; 532) herausfließt, und einen ersten Flüssigkeitsstandseinstellabschnitt (38; 138; 238; 338; 438; 538), der zu einem Außenbereich hin offen ist, einschließt;
einen zweiten Strömungsweg (60; 160; 260; 360; 460; 560), der ein zweites Flüssigkeitsreservoir (62; 162; 262; 362; 462; 562), einen zweiten Zuflussweg (64; 164; 264; 364; 464; 564), an dem die Lösung (RS, SS) in das zweite Flüssigkeitsreservoir (62; 162; 262; 362; 462; 562) fließt,
einen zweiten Abflussweg (66; 166; 266; 366; 466; 566), an dem die Lösung (RS, SS) aus dem zweiten Flüssigkeitsreservoir (62; 162; 262; 362; 462; 562) herausfließt, und einen zweiten Flüssigkeitsstandseinstellabschnitt (68; 168; 268; 368; 468; 568), der zu dem Außenbereich hin offen ist, einschließt;
eine Kapillare (24; 124; 224; 324; 424; 524), die von dem ersten Flüssigkeitsreservoir (32; 132; 232; 332; 432; 532) zu dem zweiten Flüssigkeitsreservoir (62; 162; 262; 362; 462; 562) führt; und
eine Elektrode (28), die jeweils in einem Inneren des ersten Strömungswegs (30; 130; 230; 330; 430; 530) und in einem Inneren des zweiten Strömungswegs (60; 160; 260; 360; 460; 560) angeordnet ist,
wobei die Positionen (H) in Vertikalrichtung des ersten Flüssigkeitsstandseinstellabschnitts (38; 138; 238; 338; 438; 538) und des zweiten Flüssigkeitsstandseinstellabschnitts (68; 168; 268; 368; 468; 568) zueinander gleich sind.

2. Elektrophoreseeinheit (20) nach Anspruch 1, wobei der erste Abflussweg (36) den ersten Flüssigkeitsstandseinstellabschnitt (38) ausbildet, der sich seitlich innerhalb eines Bereichs in Vertikalrichtung des ersten Flüssigkeitsreservoirs (32) erstreckt.

3. Elektrophoreseeinheit (120) nach Anspruch 2, wobei an dem ersten Zuflussweg (134) ein Ventil (140) zum Stoppen eines Flusses der Lösung (RS, SS) von oben in das erste Flüssigkeitsreservoir (132) bereitgestellt ist.

4. Elektrophoreseeinheit (220) nach Anspruch 1, wobei der erste Zuflussweg (234) so ausgebildet ist, dass er die Lösung (RS, SS) von oben in das erste Flüssigkeitsreservoir (232) zuführt und den ersten Flüssigkeitsstandseinstellabschnitt (238) ausbildet, der zu dem Außenbereich hin offen ist.

5. Elektrophoreseeinheit (320; 420; 520) nach Anspruch 1, wobei ein erster Öffnungsweg (336; 436; 536), der von dem ersten Abflussweg (336; 436; 536) abzweigt, den ersten Flüssigkeitsstandseinstellabschnitt (338; 438; 538) bildet, der zu dem Außenbereich hin offen ist.

6. Elektrophoreseeinheit (320; 420; 520) nach Anspruch 5, wobei an dem ersten Öffnungsweg (336; 436; 536) ein Ventil (340; 440; 540) zum Stoppen eines Flusses der Lösung (RS, SS) aus dem ersten Flüssigkeitsreservoir (332; 432; 532) von oben heraus bereitgestellt ist.

7. Elektrophoreseeinheit (420; 520) nach Anspruch 6, wobei an dem ersten Zuflussweg (434; 534) ein Ventil (440; 540) zum Stoppen eines Flusses der Lösung (RS, SS) von oben in das erste Flüssigkeitsreservoir (432; 532) bereitgestellt ist.

8. Komponentenanalysevorrichtung, umfassend:
die Elektrophoreseeinheit (20; 120; 220; 320; 420; 520) nach einem der Ansprüche 1 bis 7;
eine Zuführeinheit, die ausgebildet ist, um eine Probenlösung (SS) in die Elektrophoreseeinheit (20; 120; 220; 320; 420; 520) zuzuführen; und
eine Steuereinheit (22), die ausgebildet ist, um die Zuführeinheit zu steuern.

9. Komponentenanalysevorrichtung nach Anspruch 8, weiter umfassend einen Detektor (26), der eine Komponente einer Lösung (RS, SS), die innerhalb der Kapillare (24; 124; 224; 324; 424; 524) fließt, detektiert.

10. Elektrophoreseverfahren, umfassend:
einen Prozess des Bewirkens, dass eine Lösung (Migrationslösung RS, Probenlösung SS) von einem ersten Zuflussweg (34; 134; 234; 334; 434; 534) in ein erstes Flüssigkeitsreservoir (32; 132; 232; 332; 432; 532) eines ersten Strömungswegs (30; 130; 230; 330; 430; 530) fließt, der einen ersten Flüssigkeitsstandseinstellabschnitt (38; 138; 238; 338; 438; 538) einschließt, der zu einem Außenbereich hin offen ist und der einen Druck des ersten Flüssigkeitsreservoirs (32; 132; 232; 332; 432; 532) mit Außendruck ausgleicht;
einen Prozess des Bewirkens, dass die Lösung (RS, SS) von einem zweiten Zuflussweg (64; 164; 264; 364; 464; 564) in ein zweites Flüssigkeitsreservoir (62; 162; 262; 362; 462; 562) eines zweiten Strömungswegs (60; 160; 260; 360; 460; 560) fließt, der einen zweiten Flüssigkeitsstandseinstellabschnitt (68; 168; 268; 368; 468; 568), der zu dem Außenbereich hin offen ist, einschließt, der einen Druck des zweiten Flüssigkeitsreservoirs (62; 162; 262; 362; 462; 562) mit Außendruck ausgleicht und der an einer Position in Vertikalrichtung angeordnet ist, die gleich ist wie die des ersten Flüssigkeitsstandseinstellabschnitts;
einen Prozess des Befüllens einer Kapillare (24; 124; 224; 324; 424; 524), die von dem ersten Flüssigkeitsreservoir (32; 132; 232; 332; 432; 532) zu dem zweiten Flüssigkeitsreservoir (62; 162; 262; 362; 462; 562) führt, mit der Lösung (RS, SS);
einen Druckausgleichsprozess (S110; S206, S210; S308, S310; S408, S410; S508, S510; S608, S610), der ein Prozess des Verwendens des ersten Flüssigkeitsstandseinstellabschnitts (38; 138; 238; 338; 438; 538) und des zweiten Flüssigkeitsstandseinstellabschnitts (68; 168; 268; 368; 468; 568) zum Ausgleichen von Positionen (H) der Flüssigkeitsspiegel stehender Lösungen (RS, SS) in Vertikalrichtung in dem ersten Flüssigkeitsreservoir (32; 132; 232; 332; 432; 532) und dem zweiten Flüssigkeitsreservoir (62; 162; 262; 362; 462; 562) ist; und
einen Prozess des Durchführens von Elektrophorese in Bezug auf in der Lösung (RS, SS) enthaltene Komponenten innerhalb der Kapillare (24; 124; 224; 324; 424; 524) mit Elektroden (28), die jeweils innerhalb des ersten Strömungswegs (30; 130; 230; 330; 430; 530) und innerhalb des zweiten Strömungswegs (60; 160; 260; 360; 460; 560) angeordnet sind.

11. Elektrophoreseverfahren nach Anspruch 10, wobei der Druckausgleichsprozess (S110) das Bewirken einschließt, dass die Lösung (RS, SS) über einen ersten Abflussweg (36) ausfließt, der den ersten Flüssigkeitsstandseinstellabschnitt (38) bildet, der sich seitlich in einem Bereich in Vertikalrichtung des ersten Flüssigkeitsreservoirs (32) erstreckt, und Einstellen der Position in Vertikalrichtung des Flüssigkeitsspiegels der stehenden Lösung (RS, SS) in dem ersten Flüssigkeitsreservoir (32).

12. Elektrophoreseverfahren nach Anspruch 11, wobei der Druckausgleichsprozess (S206, S210) Verwenden eines Ventils (140) einschließt, das am ersten Zuflussweg (134) zum Stoppen eines Flusses der Lösung (RS, SS) von oben in das erste Flüssigkeitsreservoir (132) bereitgestellt ist, um den Fluss von Lösung (RS, SS) in dem ersten Zuflussweg (134) zu stoppen.

13. Elektrophoreseverfahren nach Anspruch 10, wobei der Druckausgleichsprozess (S308, S310) das Bewirken einschließt, dass die Lösung (RS, SS) von oben in das erste Flüssigkeitsreservoir (232) fließt, und Bewirken, dass die Lösung (RS, SS) über den ersten Zuflussweg (234) ausfließt, der den ersten Flüssigkeitsstandseinstellabschnitt (238) bildet, der zu dem Außenbereich hin offen ist.

14. Elektrophoreseverfahren nach Anspruch 10, wobei der Druckausgleichsprozess (S408, S410; S508, S510; S608, S610) das Bewirken einschließt, dass die Lösung (RS, SS) aus einem ersten Öffnungsweg (336; 436; 536) ausfließt, der von einem ersten Abflussweg (336; 436; 536) abzweigt, an dem die Lösung (RS, SS) aus dem ersten Flüssigkeitsreservoir (332; 432; 532) herausfließt, und der den ersten Flüssigkeitsstandseinstellabschnitt (338; 438; 538) bildet, der zu dem Außenbereich hin offen ist.

15. Elektrophoreseverfahren nach Anspruch 14, wobei der Druckausgleichsprozess (S408, S410; S508, S510; S608, S610) Verwenden eines Ventils (340; 440; 540) einschließt, das an dem ersten Öffnungsweg (336; 436; 536) zum Stoppen eines Flusses der Lösung (RS, SS) aus dem ersten Flüssigkeitsreservoir (332; 432; 532) von oben heraus bereitgestellt ist, um die Lösung (RS, SS) innerhalb des ersten Öffnungswegs zu stoppen.

16. Elektrophoreseverfahren nach Anspruch 15, wobei der Druckausgleichsprozess (S508, S510; S608, S610) Verwenden eines Ventils (440; 540) einschließt, das an dem ersten Zuflussweg (434; 534) zum Stoppen eines Flusses der Lösung (RS, SS) von oben in das erste Flüssigkeitsreservoir (432; 532) bereitgestellt ist, um die Lösung (RS, SS) innerhalb des ersten Zuflusswegs (434; 534) zu stoppen.

## Revendications

1. Unité d'électrophorèse (20 ; 120 ; 220 ; 320 ; 420 ; 520), comprenant :
un premier chemin d'écoulement (30 ; 130 ; 230 ; 330 ; 430 ; 530), incluant un premier réservoir de liquide (32 ; 132 ; 232 ; 332 ; 432 ; 532), un premier chemin (34 ; 134 ; 234 ; 334 ; 434 ; 534) d'entrée de flux au niveau duquel une solution
(solution de migration RS, solution d'échantillon SS)
s'écoule dans le premier réservoir de liquide (32 ; 132 ; 232 ; 332 ; 432 ; 532), un premier chemin (36 ; 136 ; 236 ; 336 ; 436 ; 536) de sortie de flux, au niveau duquel la solution (RS, SS) s'écoule hors du premier réservoir de liquide (32 ; 132 ; 232 ; 332 ; 432 ; 532), et une première section (38 ; 138 ; 238 ; 338 ; 438 ; 538) de réglage du niveau de liquide, qui est ouverte vers l'extérieur ;
un deuxième chemin d'écoulement (60 ; 160 ; 260 ; 360 ; 460 ; 560), incluant un deuxième réservoir de liquide (62 ; 162 ; 262 ; 362 ; 462 ; 562), un deuxième chemin (64 ; 164 ; 264 ; 364 ; 464 ; 564) d'entrée de flux, au niveau duquel la solution (RS, SS) s'écoule dans le deuxième réservoir de liquide (62 ; 162 ; 262 ; 362 ; 462 ; 562),
un deuxième chemin (66 ; 166 ; 266 ; 366 ; 466 ; 566) de sortie de flux, au niveau duquel la solution (RS, SS) s'écoule hors du deuxième réservoir de liquide (62 ; 162 ; 262 ; 362 ; 462 ; 562), et une deuxième section (68 ; 168 ; 268 ; 368 ; 468 ; 568) de réglage du niveau de liquide, qui est ouverte vers l'extérieur ;
un capillaire (24 ; 124 ; 224 ; 324 ; 424 ; 524), qui conduit du premier réservoir de liquide (32 ; 132 ; 232 ; 332 ; 432 ; 532) au deuxième réservoir de liquide (62 ; 162 ; 262 ; 362 ; 462 ; 562) ; et
une électrode (28), agencée dans chacun parmi l'intérieur du premier chemin d'écoulement (30 ; 130 ; 230 ; 330 ; 430 ; 530) et l'intérieur du deuxième chemin d'écoulement (60 ; 160 ; 260 ; 360 ; 460 ; 560),
dans laquelle des positions (H) dans la direction verticale de la première section de réglage du niveau de liquide (38 ; 138 ; 238 ; 338 ; 438 ; 538) et de la deuxième section (68 ; 168 ; 268 ; 368 ; 468 ; 568) de réglage du niveau de liquide sont égales l'une à l'autre.

2. Unité d'électrophorèse (20) selon la revendication 1, dans laquelle le premier chemin (36) de sortie définit la première section (38) de réglage du niveau de liquide s'étendant latéralement dans une plage dans la direction verticale du premier réservoir de liquide (32).

3. Unité d'électrophorèse (120) selon la revendication 2, dans laquelle une valve (140), destinée à arrêter un flux de la solution (RS, SS) dans le premier réservoir de liquide (132) depuis au-dessus, est prévue au niveau du premier chemin d'entrée (134).

4. Unité d'électrophorèse (220) selon la revendication 1, dans laquelle le premier chemin d'entrée (234) est configuré pour alimenter le premier réservoir de liquide (232) en solution (RS, SS) depuis au-dessus et définit la première section (238) de réglage du niveau de liquide qui est ouverte vers l'extérieur.

5. Unité d'électrophorèse (320 ; 420 ; 520) selon la revendication 1, dans laquelle un premier chemin d'ouverture (336 ; 436 ; 536), qui forme une ramification depuis le premier chemin (336 ; 436 ; 536) de sortie de flux, définit la première section (338 ; 438 ; 538) de réglage du niveau de liquide, qui est ouverte vers l'extérieur.

6. Unité d'électrophorèse (320 ; 420 ; 520) selon la revendication 5, dans laquelle une valve (340 ; 440 ; 540), destinée à arrêter un flux de la solution (RS, SS) vers l'extérieur depuis au-dessus du premier réservoir de liquide (332 ; 432 ; 532), est prévue au niveau du premier chemin d'ouverture (336 ; 436 ; 536).

7. Unité d'électrophorèse (420 ; 520) selon la revendication 6, dans laquelle une valve (440 ; 540), destinée à arrêter un flux de la solution (RS, SS) dans le premier réservoir de liquide (432 ; 532) depuis au-dessus, est prévue au niveau du premier chemin (434 ; 534) d'entrée de flux.

8. Dispositif d'analyse de composant, comprenant :
l'unité d'électrophorèse (20 ; 120 ; 220 ; 320 ; 420 ; 520) selon l'une quelconque des revendications 1 à 7 ;
une unité d'alimentation, qui est configurée pour alimenter l'unité d'électrophorèse (20 ; 120 ; 220 ; 320 ; 420 ; 520) en solution d'échantillon (SS) ; et
une unité de commande (22), qui est configurée pour commander l'unité d'alimentation.

9. Dispositif d'analyse de composant selon la revendication 8, comprenant en outre un détecteur (26) qui détecte un composant d'une solution (RS, SS) s'écoulant à l'intérieur du capillaire (24 ; 124 ; 224 ; 324 ; 424 ; 524).

10. Procédé d'électrophorèse, comprenant :
un processus consistant à amener une solution (solution de migration RS, solution d'échantillon SS) à s'écouler depuis un premier chemin (34 ; 134 ; 234 ; 334 ; 434 ; 534) d'entrée de flux dans un premier réservoir de liquide (32 ; 132 ; 232 ; 332 ; 432 ; 532) d'un premier chemin d'écoulement (30 ; 130 ; 230 ; 330 ; 430 ; 530) incluant une première section (38 ; 138 ; 238 ; 338 ; 438 ; 538) de réglage du niveau de liquide qui est ouverte vers l'extérieur et qui égalise une pression du premier réservoir de liquide (32 ; 132 ; 232 ; 332 ; 432 ; 532) avec une pression externe ;
un processus consistant à amener la solution (RS, SS) à s'écouler depuis un deuxième chemin (64 ; 164 ; 264 ; 364 ; 464 ; 564) d'entrée de flux dans un deuxième réservoir de liquide (62 ; 162 ; 262 ; 362 ; 462 ; 562) d'un deuxième chemin d'écoulement (60 ; 160 ; 260 ; 360 ; 460 ; 560) incluant une deuxième section (68 ; 168 ; 268 ; 368 ; 468 ; 568) de réglage du niveau de liquide qui est ouverte vers l'extérieur, qui égalise une pression du deuxième réservoir de liquide (62 ; 162 ; 262 ; 362 ; 462 ; 562) avec une pression externe et qui est disposée à une position dans la direction verticale qui est égale à celle de la première section de réglage du niveau de liquide ;
un processus consistant à remplir de solution (RS, SS) un capillaire (24 ; 124 ; 224 ; 324 ; 424 ; 524) conduisant du premier réservoir de liquide (32 ; 132 ; 232 ; 332 ; 432 ; 532) au deuxième réservoir de liquide (62 ; 162 ; 262 ; 362 ; 462 ; 562) ;
un processus (S110 ; S206, S210 ; S308, S310 ; S408, S410 ; S508, S510 ; S608, S610) d'égalisation de pression, qui est un processus consistant à utiliser la première section (38 ; 138 ; 238 ; 338 ; 438 ; 538) de réglage du niveau de liquide, et
la deuxième section (68 ; 168 ; 268 ; 368 ; 468 ; 568) de réglage du niveau de liquide pour égaliser des positions (H) dans la direction verticale des surfaces de liquide de la solution (RS, SS) au repos dans le premier réservoir de liquide (32 ; 132 ; 232 ; 332 ; 432 ; 532) et le deuxième réservoir de liquide (62 ; 162 ; 262 ; 362 ; 462 ; 562) ; et
un processus consistant à effectuer une électrophorèse en ce qui concerne des composants contenus dans la solution (RS, SS) à l'intérieur du capillaire (24 ; 124 ; 224 ; 324 ; 424 ; 524) au moyen d'électrodes (28) agencées respectivement à l'intérieur du premier chemin (30 ; 130 ; 230 ; 330 ; 430 ; 530) d'écoulement de flux et à l'intérieur du deuxième chemin (60 ; 160 ; 260 ; 360 ; 460 ; 560) d'écoulement de flux.

11. Procédé d'électrophorèse selon la revendication 10, dans lequel le processus (S110) d'égalisation de pression inclut le fait d'amener la solution (RS, SS) à s'écouler vers l'extérieur via un premier chemin (36) de sortie de flux définissant la première section (38) de réglage du niveau de liquide s'étendant latéralement dans une plage dans la direction verticale du premier réservoir de liquide (32), et le fait d'ajuster la position dans la direction verticale de la surface de liquide de la solution (RS, SS) au repos dans le premier réservoir de liquide (32).

12. Procédé d'électrophorèse selon la revendication 11, dans lequel le processus (S206, S210) d'égalisation de pression inclut le fait d'utiliser une valve (140), prévue au niveau du premier chemin d'entrée (134), pour arrêter un flux de la solution (RS, SS) dans le premier réservoir de liquide (132) depuis au-dessus, afin d'arrêter le flux de la solution (RS, SS) dans le premier chemin d'entrée (134).

13. Procédé d'électrophorèse selon la revendication 10, dans lequel le processus (S308, S310) d'égalisation de pression inclut le fait d'amener la solution (RS, SS) à s'écouler dans le premier réservoir de liquide (232) depuis au-dessus et d'amener la solution (RS, SS) à s'écouler vers l'extérieur via le premier chemin (234) d'entrée de flux définissant la première section (238) de réglage du niveau de liquide qui est ouverte vers l'extérieur.

14. Procédé d'électrophorèse selon la revendication 10, dans lequel le processus (S408, S410 ; S508, S510 ; S608, S610) d'égalisation de pression inclut le fait d'amener la solution (RS, SS) à s'écouler vers l'extérieur depuis un premier chemin d'ouverture (336 ; 436 ; 536) qui forme une dérivation depuis un premier chemin (336 ; 436 ; 536) de sortie de flux au niveau duquel la solution (RS, SS) s'écoule hors du premier réservoir de liquide (332 ; 432 ; 532) et qui définit la première section (338 ; 438 ; 538) de réglage du niveau de liquide qui est ouverte vers l'extérieur.

15. Procédé d'électrophorèse selon la revendication 14, dans lequel le processus (S408, S410 ; S508, S510 ; S608, S610) d'égalisation de pression inclut le fait d'utiliser une valve (340 ; 440 ; 540), prévue au niveau du premier chemin d'ouverture (336 ; 436 ; 536), pour arrêter un flux de la solution (RS, SS) vers l'extérieur depuis au-dessus du premier réservoir de liquide (332 ; 432 ; 532), afin d'arrêter la solution (RS, SS) à l'intérieur du premier chemin d'ouverture.

16. Procédé d'électrophorèse selon la revendication 15, dans lequel le processus (S508, S510 ; S608, S610) d'égalisation de pression inclut le fait d'utiliser une valve (440 ; 540), prévue au niveau du premier chemin d'entrée (434 ; 534), pour arrêter un flux de la solution (RS, SS) dans le premier réservoir de liquide (432 ; 532) depuis au-dessus, afin d'arrêter la solution (RS, SS) à l'intérieur du premier chemin d'entrée (434 ; 534).
